# EUROPEAN PATENT APPLICATION

(11) **EP 4 325 481 A1**
(43) Date of publication of application: **21.02.2024**
(21) Application number: 22811684.4
(22) Date of filing: 27.05.2022
(51) Int. Cl.: G10L 15/08, G10L 15/26, G10L 25/63, G10L 15/187, G06F 3/16, G06F 16/65, G01S 3/801, F16M 11/20, H04R 1/32, H04R 1/40

(54) **METHOD BY WHICH COMPUTING APPARATUS PROCESSES SOUND, METHOD FOR PROCESSING IMAGE AND SOUND, AND SYSTEMS USING SAME**

(30) Priority: 27.05.2021 KR 20210068128
(71) Applicant: Lee, Choong Ryul, Seoul 08804 (KR)
(72) Inventor: Lee, Choong Ryul, Seoul 08804 (KR)
(74) Representative: Barbaro, Gaetano
(86) International application number: PCT/KR2022/007562
(87) International publication number: WO 2022/250493

(57) **Abstract**

Disclosed is a method for processing a sound, which is performed by a computing apparatus including a processor, and the method may include: acquiring a sound including at least one sound object; and generating sound processing information from the sound by using a sound processing module, the generating of the sound processing information may include classifying a first category of each of the at least one sound object, and generating first detailed classification information including at least one of characteristics which are a property of the at least one sound object which is invariant with respect to time or a state which is the property of the at least one sound object which is variable with respect to the time. A selected figure may be FIG. 2.

## Description

### [Technical Field]

The present disclosure discloses a method for processing a sound acquired by sound input device such as an input source such as a microphone, a method for processing the sound jointly with an image acquired by a photographing device, and/or systems using the same.

### [Background Art]

A portable computing apparatus generally refers to a device equipped with a processor, display, microphone, and speakers, some of which may be used as a portable terminal, a type of communication device. Portable terminals have traditionally received user commands through input devices, such as keypads and touch displays, that require user contact, but with the development of voice recognition technology and computer vision technology, the portable terminals may receive user commands from a remote distance through input devices, such as microphones and cameras, and interaction with the user according to the commands.

However, because portable computing apparatuses do not have self-mobility, their range of inputs and outputs is limited by their physical position.

As an example of the physical limitations of the input device mounted on the portable computing apparatus, in particular, the reception sensitivity of the microphone mounted on the portable computing apparatus deteriorates depending on the direction of the sound source, and there is a limitation in which it is difficult to determine the direction of the sound source itself, which acts as an obstacle to active interaction.

Accordingly, the present inventor intends to present, as a method to overcome the limitation regarding the input of sound including voice among the limitations of the portable computing apparatus of the prior art, a technical method which combines a gimbal with a portable computing apparatus equipped with a microphone or a sound input device such as a microphone which interlocks with the portable computing apparatus and allows the computing apparatus to control the gimbal, which rotates on one axis or more to more dynamically receive the sound and process the sound.

In this regard, Korean Patent Unexamined Publication No. 10-2011-0032244, Korean Patent Unexamined Publication No. 10-2019-0085464, Korean Patent Unexamined Publication No. 10-2019-0074011, Korean Patent Unexamined Publication No. 10-2019-0098091, Korean Patent Unexamined Publication No. 10-2019-0106943, and Korean Patent Unexamined Publication No. 10-2018-0109499 are contrived. In addition, in this regard, (Non-patent Document 1) Shin, D. & Kim, I., (2018)., Deep Image Understanding Using Multilayered Contexts. Mathematical Problems in Engineering, 2018, 1-11. https://doi.ors/10.1155/2018/5847460 and (Non-patent Document 2) Buck, M. & Rossler, M. (2001), FIRST ORDER DIFFERENTIAL MICROPHONE ARRAYS FOR AUTOMOTIVE APPLICATIONS are contrived.

### [Disclosure]

### [Technical Problem]

The present disclosure has been made in an effort to a method for processing a sound or a combination of the sound and an image, which can recognize and track an object from a sound acquired by a microphone in a portable computing apparatus, and actively acquire information on the object and an environment, and enables an interaction such as a remote input through the sound.

### [Technical Solution]

In order to solve the problem, a method for processing a sound, which is performed by a computing apparatus including a processor may include: acquiring a sound including at least one sound object; and generating sound processing information from the sound by using a sound processing module, the generating of the sound processing information may include classifying a first category of each of the at least one sound object, and generating first detailed classification information including at least one of characteristics which are a property of the at least one sound object which is invariant with respect to time or a state which is the property of the at least one sound object which is variable with respect to the time.

Alternatively, the sound processing module may include a sound processing model and/or a sound interpreter connected to the sound processing model, and the generating of the first detailed classification may include selecting the sound processing model corresponding to the first category of the sound object, and/or acquiring at least one of verbal information or non-verbal information from the sound by using the sound interpreter.

Alternatively, the sound interpreter may include at least one of a language processor interpreting a language included in the sound and acquiring a context corresponding to the language, or a non-verbal processor interpreting a non-verbal sound included in the sound, and acquiring at least one of an emotion, a priority, location information, or a voiceprint of the at least one sound object. The location information may include information related to the location of the sound object. For example, the location information may include at least one of a direction, an angle, a distance, and a location of the sound object. However, the location information is not limited to this and may include various data related to the location of the sound object.

Alternatively, the generating of the first detailed classification may include attempting detecting a partial object from the sound object, and further generating an analysis result of at least one of a characteristic or a state for the partial object included in the first detailed classification information when the partial object is detected.

Alternatively, the partial object may be a part of the at least one sound object or a component belonging to the at least one sound object.

Alternatively, the method may further include calculating location information of the sound of each of the at least one sound object by using a sound tracking controller.

Alternatively, the method may further include inducing the at least one sound object to perform pronunciation to specify the at least one sound object.

Alternatively, the computing apparatus may be linked to a gimbal having one or more rotational axes, and the method may further include controlling the gimbal based on location information of the sound of each of the at least one sound object. The location information may include information related to the location of the sound object. For example, the location information may include at least one of a direction, an angle, a distance, and a location of the sound object. However, the location information is not limited to this and may include various data related to the location of the sound object.

Alternatively, the controlling of the gimbal may include querying a first sound object among the at least one sound object as to and confirming whether the first sound object is a generation source of the sound, and confirming whether an object which performs pronunciation is an object corresponding to the first sound object through image tracking using the gimbal controlling a photographing device.

Alternatively, the method may further include: acquiring an image including at least one image object; classifying a second category of each of the at least one image object; and generating second detailed classification information including at least one of a characteristic or a state that is the property of at least one image object.

Alternatively, the method may further include matching the at least one sound object and the at least one image object with each other based on at least one of the first category, the second category, the first detailed classification information, or the second detailed classification information.

Alternatively, the method may further include matching the at least one sound object and the at least one image object to each other by capturing a sound generation motion of the at least one image object.

Alternatively, the sound object and the image object may be matched with each other by comparing an individual sound of each of the at least one sound object and a sound generation motion of the each of at least one image object.

In order to solve the problem, in a non-transitory computer-readable medium including a computer program, the computer program allows a computing apparatus to perform a method for processing a sound, and the method may include: acquiring a sound including at least one sound object; and generating sound processing information from the sound by using a sound processing module, and the generating of the sound processing information may include classifying a first category of each of the at least one sound object, and generating first detailed classification information including at least one of characteristics which are a property of the at least one sound object which is invariant with respect to time or a state which is the property of the at least one sound object which is variable with respect to the time.

In order to solve the problem, a computing apparatus may include: a processor; and a communication unit, and the processor may acquires a sound including at least one sound object, generate sound processing information from the sound by using a sound processing module, classify a first category of each of the at least one sound object when the sound processing information is generated, and generate first detailed classification information including at least one of characteristics which are a property of the at least one sound object which is invariant with respect to time or a state which is the property of the at least one sound object which is variable with respect to the time.

### [Advantageous Effects]

According to an exemplary embodiment of the present disclosure, there is an effect in that one or more objects can be recognized and tracked by using a sound or a combination of the sound and an image, information on the object and an environment can be actively acquired, and in particular, state information of the object can be remotely acquired by the sound or the combination of the sound and the image, and an object with which the object interacts can be determined, so remote input and output are enabled using the sound or the combination of the sound and the image of a portable computing apparatus.

### [Description of Drawings]

The following drawings, which are appended hereto for the purpose of illustrating exemplary embodiments of the present disclosure, are only a few of the exemplary embodiments of the present disclosure, and it will be apparent to those skilled in the art to which the present disclosure belongs (hereinafter referred to as "those skilled in the art") that other drawings may be obtained on the basis of these drawings without further effort leading to the disclosure.
FIG. 1 is a conceptual view schematically illustrating an exemplary configuration of a computing apparatus performing a method for processing a sound by the computing apparatus (hereinafter, referred to as "sound processing method") according to an embodiment of the present disclosure.
FIG. 2 is a conceptual view exemplarily illustrating the entire hardware and software architecture including a computing apparatus, a microphone, and a gimbal as a system for performing a sound processing method according to an embodiment of the present disclosure.
FIG. 3 is a flowchart exemplarily illustrating a sound processing method according to an embodiment of the present disclosure, and FIG. 4 is a block diagram exemplarily illustrating modules that perform each step of the sound processing method according to an embodiment of the present disclosure.
FIG. 5 is a block diagram exemplarily illustrating machine learning models used in modules for the sound processing method according to an embodiment of the present disclosure.
FIGS. 6A to 6C are flowcharts illustrating, in more detail, a location information detecting step of the sound processing method according to the present disclosure.
FIG. 7 is a diagram exemplified for describing a scheme of performing the location information detecting step using object classification tracking in the sound processing method according to an embodiment of the present disclosure.
FIG. 8 is a diagram exemplified for describing a scheme of performing the location information detecting step using pronunciation behavior pattern tracking in the sound processing method according to an embodiment of the present disclosure.
FIG. 9 is a flowchart exemplarily illustrating a method for processing an image and a sound by a computing apparatus (hereinafter referred to as "image and sound processing method") according to another embodiment of the present disclosure.

### [Best Mode]

All prior art references cited in the present disclosure are incorporated by reference in their entirety as set forth herein. Unless otherwise defined, all terms used herein including technical or scientific terms shall have the same meaning as commonly understood by those skilled in the art. Terms defined in generally used dictionary shall be construed that they have meanings matching those in the context of a related art, and shall not be construed in ideal or excessively formal meanings unless they are clearly defined in the present specification.

For the following detailed description of the present disclosure, reference is made to the accompanying drawings, which illustrate by way of example of a specific exemplary embodiment in which the disclosure may be practiced, in order to make clear the objects, technical solutions, and advantages of the present disclosure. These exemplary embodiments are described in sufficiently detail to enable those skilled in the art to practice the present disclosure. In the following description with reference to the accompanying drawings, identical components are given the same reference numerals regardless of reference numeral, and duplicate descriptions are hereby omitted.

Specific structural or functional descriptions of the exemplary embodiments are disclosed for illustrative purposes only and the exemplary embodiments may be practiced with various modifications. Accordingly, the exemplary embodiments are not limited to a specific disclosure form, and the scope of the present specification includes modifications, equivalents, or substitutions included in the technical spirit.

Terms, such as "first" and "second", are used for describing various constituent elements, but the terms are used only to discriminate one constituent element from another constituent element, and do not imply any order. For example, the first constituent element may be referred to as the second constituent element, and similarly, the second constituent element may also be renamed as the first constituent element.

In addition, the first component "and/or" the second component should be understood to refer to at least one of the first component and the second component. It should be understood that when one constituent element referred to as being "connected to" another constituent element, one constituent element may be directly coupled to or connected to the other constituent element, but intervening elements may also be present.

Singular expressions used herein include plurals expressions unless they have definitely opposite meanings in the context. In the present specification, it will be appreciated that terms "including" and "having" are intended to designate the existence of characteristics, numbers, steps, operations, constituent elements, and components described in the specification or a combination thereof, and do not exclude a possibility of the existence or addition of one or more other characteristics, numbers, operations, operations, constituent elements, and components, or a combination thereof in advance.

Also, a "part" or "portion" of a specific target may refer only to a part of the target, not the whole of the target, but should be understood to include the whole of the target unless the context indicates otherwise. A subset of a set is a concept that the subset includes the set itself.

In the present disclosure, "module" may refer to hardware capable of performing a function and an operation according to each name described in the present disclosure, computer program code capable of performing a specific function and operation, or a recording medium having computer program code capable of performing a specific function and operation. In other words, a module may refer to a functional and/or structural combination of hardware for carrying out the technical spirits of the present disclosure and/or software for driving the hardware.

Strictly speaking, a "model" refers to a function that is configured to produce output data from input data as trained by machine learning. Such a "model" may be used by the aforementioned "module" as a kind of data structure or function.

However, it has been found that some persons skilled in the artificial intelligence field are in the habit of using the terms "module" and "model" interchangeably, and accordingly, the terms "module" and "model" may be used interchangeably in the present disclosure because they are easily understood by persons skilled in the art without conceptual confusion between them.

In the present disclosure, the terms "training" and "learning" refer to performing machine learning through procedural computing, and are not intended to refer to mental operations, such as human educational activities. The term "machine learning" is often used to refer to a set of processes that generate a target function (f) that maps input variables (X) to output variables (Y) well, as it is commonly used in the field of statistics. Calculating an output variable from input variables by a target function is called "predicting," and "mapping well" means reasonably reducing the difference between a true value and a predicted value. The reason for reasonably reducing the difference, rather than just minimizing the difference, is that optimization may lead to the so-called overfitting problem, that is, poor predictions when real data that deviates from the training data is applied, and appropriate empirical means are devised to solve the problem.

In addition, in the present disclosure, the term "inference" is used to refer to the process of producing output data from input data by a machine-learned model, and in particular to a mechanical mimicry of human mental operations. Similarly, in the present disclosure, "analysis" by a machine is used to refer to a mechanical mimicry of human mental operations, similar to the inference.

Data addressed in this disclosure may be processed through a machine learned model, for example, a neural network model. The terminal where the results value of respective models are output or the intermediate stages of the respective models (for example, hidden layers or hidden nodes of two or more models, etc.) are connected in series or parallel to each other, so that not a final result value but an intermediate result value may be reused. Intermediate data may be reused as input data of another model. In addition, a processing result of any one model may be reused as input data of another model.

Furthermore, the disclosure encompasses all possible combinations of the exemplary embodiments disclosed in the present disclosure. It is to be understood that the various exemplary embodiments of the present disclosure are different, but need not be mutually exclusive. For example, specific shapes, structures, and characteristics described herein may be implemented in other exemplary embodiments without departing from the spirit and the scope of the present disclosure in relation to one exemplary embodiment. Further, it should be understood that a position or disposition of an individual component in each disclosed exemplary embodiment may be changed without departing from the spirit and the scope of the present disclosure. Accordingly, the detailed description below is not intended to be taken in a limited meaning. Like reference numerals in the drawings refer to the same or similar functions over several aspects.

In this specification, unless otherwise indicated or clearly contradicted by the context, items referred to in the singular include the plural, unless the context otherwise requires. Further, in the following description of the present disclosure, a detailed description of known configurations or functions incorporated herein will be omitted when it is judged that the detailed description may make the subject matter of the present disclosure unclear.

In order to facilitate the practice of the present disclosure by those skilled in the art, exemplary embodiments of the present disclosure will be described in detail with reference to the accompanying drawings.

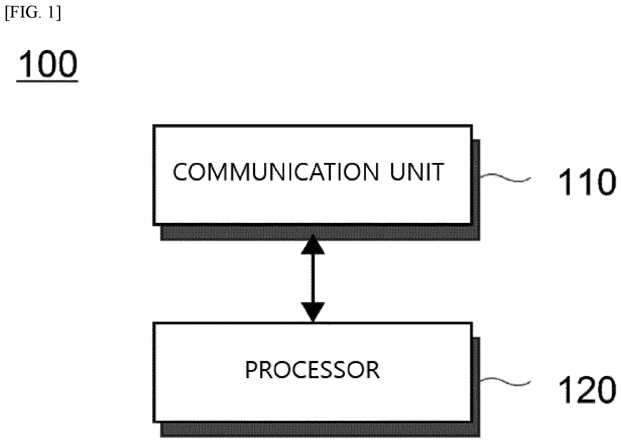

FIG. 1 is a conceptual view schematically illustrating an exemplary configuration of a computing apparatus that performs a sound processing method according to an embodiment of the present disclosure.
Referring to FIG. 1, a computing apparatus 100 according to an exemplary embodiment of the present disclosure includes a communication unit 110 and a processor 120, and may directly or indirectly communicate with an external computing apparatus (not illustrated) through the communication unit 110.

In particular, the computing apparatus 100 may achieve desired system performance by using a combination of typical computer hardware (for example, computers; devices that may include processors, memory, storage, input devices and output devices, and other components of existing computing apparatuses; electronic communication devices, such as routers and switches; electronic information storage systems, such as Network-Attached Storage (NAS) and Storage Area Networks (SAN)) and computer software (that is, instructions that cause the computing apparatus to function in a particular way). The storage may include the form of memory devices, such as hard disks, Universal Serial Bus (USB) memory, as well as network-connected storage devices, such as cloud servers. Herein, the memory may be, but is not limited to, DDR2, DDR3, DDR4, SDP, DDP, QDP, magnetic hard disk, and flash memory.

The communication unit 110 of the computing apparatus may transmit and receive requests and responses to and from other interlocked computing apparatuses, for example, portable terminals, and in one example, the requests and responses may be made in the same Transmission Control Protocol (TCP) session, but the present disclosure is not limited, and for example, requests and responses may also be transmitted and received as User Datagram Protocol (UDP) datagrams.

Specifically, the communication unit 110 may be implemented in the form of a communication module that includes a communication interface. For example, communication interfaces may include wireless Internet interfaces, such as Wireless LAN (WLAN), Wireless Fidelity (WiFi) Direct, Digital Living Network Alliance (DLNA), Wireless Broadband (WiBro), World interoperability for Microwave access (WiMax), High Speed Downlink Packet Access (HSDPA), 4G, 5G, and near field communication interfaces, such as Bluetooth^{™}, Radio Frequency IDentification (RFID), Infrared Data Association; (IrDA), Ultra-WideBand (UWB), ZigBee, and Near Field Communication (NFC). In addition, a communication interface may represent any interface (for example, a wired interface) that can communicate with the outside world.

For example, the communication unit 110 may transmit and receive data from other computing apparatuses through a suitable communication interface. Furthermore, in a broad sense, the communication unit 110 may include or be interlocked with external input devices, such as a keyboard, mouse, touch sensor, input unit of a touch screen, microphone, video camera, or LIDAR, radar, switch, button, and joystick, for receiving commands or instructions, and external output devices, such as a sound card, graphics card, printing device, display, for example, a display unit of a touch screen. In order to display and provide an appropriate user interface to a user of a computing apparatus, such as a portable terminal, to enable interaction with the user, it is known that the computing apparatus 100 may include a display device or may be interlocked with an external display device through the communication unit 110. For example, the display device may be a touchscreen on which a touch input is possible. The touchscreen may detect an object, such as a finger or stylus pen, that is in contact with or proximate to the display capacitively, inductively, or optically, and may determine a position of the detected object on the display.

The input device may also include a microphone. Types of microphones may include dynamic microphones, condenser microphones, and the like, and a microphone having omnidirectional, cardioid, or hypercardioid characteristic may be used. Beamforming microphones and microphone arrays may also be used, but are not limited to. A microphone array refers to two or more microphones used to detect the direction of a sound source.

The output device may also include a speaker. Types of speakers may include, but are not limited to, omnidirectional speakers, directional speakers, and ultra-directional speakers using ultrasound.

Further, the processor 120 of the computing apparatus may include a hardware configuration, such as a Micro Processing Unit (MPU), Central Processing Unit (CPU), Graphics Processing Unit (GPU), Neural Processing Unit (NPU), ASIC, CISC, RISC, FPGA, SOC chip, or Tensor Processing Unit (TPU), cache memory, data bus, and the like. Further, the processor 120 may also further include software configurations of operating systems, and applications that fulfill specific purposes. According to the exemplary embodiment of the present disclosure, the processor 120 may perform computations for training a neural network of various models. The processor 120 may perform a calculation, such as processing of input data for training in Deep Learning (DL), extraction of a feature from input data, an error calculation, and updating of a weight of the neural network by using backpropagation, for training the neural network. At least one of a CPU, a General Purpose Graphics Processing Unit (GPGPU), and/or a TPU of the processor 110 may process the learning of the network function. For example, the CPU and the GPGPU may process learning of the network function and data classification by using a network function together. Further, in the exemplary embodiment of the present disclosure, the learning of the network function and the data classification by using a network function may be processed by using the processors of the plurality of computing apparatuses together. Further, a computer program executed in the computing apparatus 100 according to the exemplary embodiment of the present disclosure may be a CPU, GPGPU, or TPU executable program.

Throughout the present specification, a calculation model, a nerve network, the network function, and the neural network may be used with the same meaning. The neural network may be formed of a set of interconnected calculation units which are generally referred to as "nodes". The "nodes" may also be called "neurons". The neural network consists of one or more nodes. The nodes (or neurons) configuring the neural network may be interconnected by one or more links.

In the neural network, one or more nodes connected through the links may relatively form a relationship of an input node and an output node. The concept of the input node is relative to the concept of the output node, and a predetermined node having an output node relationship with respect to one node may have an input node relationship in a relationship with another node, and a reverse relationship is also available. As described above, the relationship between the input node and the output node may be generated based on the link. One or more output nodes may be connected to one input node through a link, and a reverse case may also be valid.

In the relationship between an input node and an output node connected through one link, a value of the output node data may be determined based on data input to the input node. Herein, a link connecting the input node and the output node may have a weight. The weight is variable, and in order for the neural network to perform a desired function, the weight may be varied by a user or an algorithm. For example, when one or more input nodes are connected to one output node by links, respectively, a value of the output node may be determined based on values input to the input nodes connected to the output node and weighted values set in the link corresponding to each of the input nodes.

As described above, in the neural network, one or more nodes are connected with each other through one or more links to form a relationship of an input node and an output node in the neural network. A characteristic of the neural network may be determined according to the number of nodes and links in the neural network, a correlation between the nodes and the links, and a value of the weight assigned to each of the links. For example, when there are two neural networks in which the numbers of nodes and links are the same and the weight values between the links are different, the two neural networks may be recognized to be different from each other.

The neural network may consist of a set of one or more nodes. A subset of the nodes configuring the neural network may form a layer. Some of the nodes configuring the neural network may form one layer on the basis of distances from an initial input node. For example, a set of nodes having a distance of n from an initial input node may form n layers. The distance from the initial input node may be defined by the minimum number of links, which need to be passed to reach a corresponding node from the initial input node. However, the definition of the layer is arbitrary for the description, and a degree of the layer in the neural network may be defined by a different method from the foregoing method. For example, the layers of the nodes may be defined by a distance from a final output node.

The initial input node may mean one or more nodes to which data is directly input without passing through a link in a relationship with other nodes among the nodes in the neural network. Otherwise, the initial input node may mean nodes which do not have other input nodes connected through the links in a relationship between the nodes based on the link in the neural network. Similarly, the final output node may mean one or more nodes that do not have an output node in a relationship with other nodes among the nodes in the neural network. Further, the hidden node may mean nodes configuring the neural network, not the initial input node and the final output node.

In the neural network according to the exemplary embodiment of the present disclosure, the number of nodes of the input layer may be the same as the number of nodes of the output layer, and the neural network may be in the form that the number of nodes decreases and then increases again from the input layer to the hidden layer. Further, in the neural network according to another exemplary embodiment of the present disclosure, the number of nodes of the input layer may be smaller than the number of nodes of the output layer, and the neural network may be in the form that the number of nodes decreases from the input layer to the hidden layer. Further, in the neural network according to another exemplary embodiment of the present disclosure, the number of nodes of the input layer may be larger than the number of nodes of the output layer, and the neural network may be in the form that the number of nodes increases from the input layer to the hidden layer. The neural network according to another exemplary embodiment of the present disclosure may be the neural network in the form in which the foregoing neural networks are combined.

A deep neural network (DNN) may mean the neural network including a plurality of hidden layers, in addition to an input layer and an output layer. When the DNN is used, it is possible to recognize a latent structure of data. That is, it is possible to recognize latent structures of photos, texts, videos, voice, and music (for example, what objects are in the photos, what the content and emotions of the texts are, and what the content and emotions of the voice are). The DNN may include a convolutional neural network (CNN), a recurrent neural network (RNN), an auto encoder, Generative Adversarial Networks (GAN), a restricted Boltzmann machine (RBM), a deep belief network (DBN), a Q network, a U network, a Siamese network, and the like. The foregoing description of the deep neural network is merely illustrative, and the present disclosure is not limited thereto.

The neural network may be trained by at least one scheme of supervised learning, unsupervised learning, semi-supervised learning, and reinforcement learning. The training of the neural network may be a process of applying knowledge for the neural network to perform a specific operation to the neural network.

The neural network may be trained in a direction of minimizing an error of an output. In the training of the neural network, training data is repeatedly input to the neural network and an error of an output of the neural network for the training data and a target is calculated, and the error of the neural network is back-propagated in a direction from an output layer to an input layer of the neural network in order to decrease the error, and a weight of each node of the neural network is updated. In the case of the supervised learning, training data labelled with a correct answer (that is, labelled training data) is used, in each training data, and in the case of the unsupervised learning, a correct answer may not be labelled to each training data. That is, for example, the training data in the supervised learning for data classification may be data, in which category is labelled to each of the training data. The labelled training data is input to the neural network and the output (category) of the neural network is compared with the label of the training data to calculate an error. For another example, in the case of the unsupervised learning related to the data classification, training data that is the input is compared with an output of the neural network, so that an error may be calculated. The calculated error is back-propagated in a reverse direction (that is, the direction from the output layer to the input layer) in the neural network, and a connection weight of each of the nodes of the layers of the neural network may be updated according to the backpropagation. A change amount of the updated connection weighted value of each node may be determined according to a learning rate. The calculation of the neural network for the input data and the backpropagation of the error may configure a learning epoch. The learning rate is differently applicable according to the number of times of repetition of the learning epoch of the neural network. For example, at the initial stage of the learning of the neural network, a high learning rate is used to make the neural network rapidly secure performance of a predetermined level and improve efficiency, and at the latter stage of the learning, a low learning rate is used to improve accuracy.

In the training of the neural network, the training data may be generally a subset of actual data (that is, data to be processed by using the trained neural network), and thus an error for the training data is decreased, but there may exist a learning epoch, in which an error for the actual data is increased. Overfitting is a phenomenon, in which the neural network excessively learns training data, so that an error for actual data is increased. For example, a phenomenon, in which the neural network learning a cat while seeing a yellow cat cannot recognize cats, other than a yellow cat, as cats, is a sort of overfitting. Overfitting may act as a reason of increasing an error of a machine learning algorithm. In order to prevent overfitting, various optimizing methods may be used. In order to prevent overfitting, a method of increasing training data, a regularization method, a dropout method of inactivating a part of nodes of the network during the training process, a method using a bath normalization layer, and the like may be applied.

According to the exemplary embodiment of the present disclosure, a computer readable medium storing a data structure is disclosed.

The data structure may refer to organization, management, and storage of data that enable efficient access and modification of data. The data structure may refer to organization of data for solving a specific problem (for example, data search, data storage, and data modification in the shortest time). The data structure may also be defined with a physical or logical relationship between the data elements designed to support a specific data processing function. A logical relationship between data elements may include a connection relationship between user defined data elements. A physical relationship between data elements may include an actual relationship between the data elements physically stored in a computer readable storage medium (for example, a permanent storage device). In particular, the data structure may include a set of data, a relationship between data, and a function or a command applicable to data. Through the effectively designed data structure, the computing apparatus may perform a calculation while minimally using resources of the computing apparatus. In particular, the computing apparatus may improve efficiency of calculation, reading, insertion, deletion, comparison, exchange, and search through the effectively designed data structure.

The data structure may be divided into a linear data structure and a non-linear data structure according to the form of the data structure. The linear data structure may be the structure in which only one data is connected after one data. The linear data structure may include a list, a stack, a queue, and a deque. The list may mean a series of dataset in which order exists internally. The list may include a linked list. The linked list may have a data structure in which data is connected in a method in which each data has a pointer and is linked in a single line. In the linked list, the pointer may include information about the connection with the next or previous data. The linked list may be expressed as a single linked list, a double linked list, and a circular linked list according to the form. The stack may have a data listing structure with limited access to data. The stack may have a linear data structure that may process (for example, insert or delete) data only at one end of the data structure. The data stored in the stack may have a data structure (Last In First Out, LIFO) in which the later the data enters, the sooner the data comes out. The queue is a data listing structure with limited access to data, and may have a data structure (First In First Out, FIFO) in which the later the data is stored, the later the data comes out, unlike the stack. The deque may have a data structure that may process data at both ends of the data structure.

The non-linear data structure may be the structure in which the plurality of data is connected after one data. The non-linear data structure may include a graph data structure. The graph data structure may be defined with a vertex and an edge, and the edge may include a line connecting two different vertexes. The graph data structure may include a tree data structure. The tree data structure may be the data structure in which a path connecting two different vertexes among the plurality of vertexes included in the tree is one. That is, the tree data structure may be the data structure in which a loop is not formed in the graph data structure.

Throughout the present specification, a calculation model, a nerve network, the network function, and the neural network may be used with the same meaning. Hereinafter, the terms of the calculation model, the nerve network, the network function, and the neural network are unified and described with a neural network. The data structure may include a neural network. Further, the data structure including the neural network may be stored in a computer readable medium. The data structure including the neural network may also include preprocessed data for processing by the neural network, data input to the neural network, a weight of the neural network, a hyper-parameter of the neural network, data obtained from the neural network, an active function associated with each node or layer of the neural network, and a loss function for training of the neural network. The data structure including the neural network may include predetermined configuration elements among the disclosed configurations. That is, the data structure including the neural network may include the entirety or a predetermined combination of pre-processed data for processing by neural network, data input to the neural network, a weight of the neural network, a hyper parameter of the neural network, data obtained from the neural network, an active function associated with each node or layer of the neural network, and a loss function for training the neural network. In addition to the foregoing configurations, the data structure including the neural network may include other predetermined information determining a characteristic of the neural network. Further, the data structure may include all types of data used or generated in a computation process of the neural network, and is not limited to the foregoing matter. The computer readable medium may include a computer readable recording medium and/or a computer readable transmission medium. The neural network may be formed of a set of interconnected calculation units which are generally referred to as "nodes". The "nodes" may also be called "neurons". The neural network consists of one or more nodes.

The data structure may include data input to the neural network. The data structure including the data input to the neural network may be stored in the computer readable medium. The data input to the neural network may include training data input in the training process of the neural network and/or input data input to the training completed neural network. The data input to the neural network may include data that has undergone pre-processing and/or data to be pre-processed. The pre-processing may include a data processing process for inputting data to the neural network. Accordingly, the data structure may include data to be pre-processed and data generated by the pre-processing. The foregoing data structure is merely an example, and the present disclosure is not limited thereto.

The data structure may include a weight of the neural network (in the present specification, weights and parameters may be used with the same meaning.) Further, the data structure including the weight of the neural network may be stored in the computer readable medium. The neural network may include a plurality of weights. The weight is variable, and in order for the neural network to perform a desired function, the weight may be varied by a user or an algorithm. For example, when one or more input nodes are connected to one output node by links, respectively, the output node may determine a data value output from the output node based on values input to the input nodes connected to the output node and the weight set in the link corresponding to each of the input nodes. The foregoing data structure is merely an example, and the present disclosure is not limited thereto.

For a non-limited example, the weight may include a weight varied in the neural network training process and/or the weight when the training of the neural network is completed. The weight varied in the neural network training process may include a weight at a time at which a training cycle starts and/or a weight varied during a training cycle. The weight when the training of the neural network is completed may include a weight of the neural network completing the training cycle. Accordingly, the data structure including the weight of the neural network may include the data structure including the weight varied in the neural network training process and/or the weight when the training of the neural network is completed. Accordingly, it is assumed that the weight and/or a combination of the respective weights are included in the data structure including the weight of the neural network. The foregoing data structure is merely an example, and the present disclosure is not limited thereto.

The data structure including the weight of the neural network may be stored in the computer readable storage medium (for example, a memory and a hard disk) after undergoing a serialization process. The serialization may be the process of storing the data structure in the same or different computing apparatuses and converting the data structure into a form that may be reconstructed and used later. The computing apparatus may serialize the data structure and transceive the data through a network. The serialized data structure including the weight of the neural network may be reconstructed in the same or different computing apparatuses through deserialization. The data structure including the weight of the neural network is not limited to the serialization. Further, the data structure including the weight of the neural network may include a data structure (for example, in the non-linear data structure, B-Tree, Trie, m-way search tree, AVL tree, and Red-Black Tree) for improving efficiency of the computation while minimally using the resources of the computing apparatus. The foregoing matter is merely an example, and the present disclosure is not limited thereto.

The data structure may include a hyper-parameter of the neural network. The data structure including the hyper-parameter of the neural network may be stored in the computer readable medium. The hyper-parameter may be a variable varied by a user. The hyper-parameter may include, for example, a learning rate, a cost function, the number of times of repetition of the training cycle, weight initialization (for example, setting of a range of a weight value to be weight-initialized), and the number of hidden units (for example, the number of hidden layers and the number of nodes of the hidden layer). The foregoing data structure is merely an example, and the present disclosure is not limited thereto.

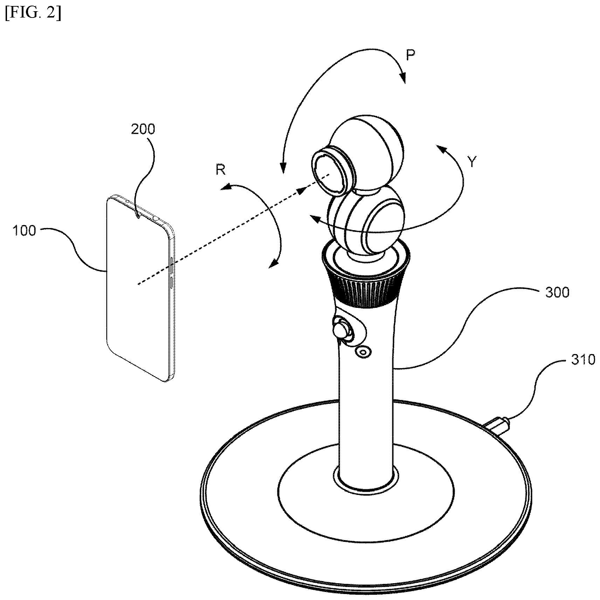

FIG. 2 is a conceptual view exemplarily illustrating the entire hardware and software architecture including a computing apparatus, a microphone, and a gimbal as a system for performing a sound processing method according to an embodiment of the present disclosure.

Referring to FIG. 2 to overview the configuration of the method and device according to the present disclosure, the computing apparatus 100 may include a photographing device 200, and may be linked with an external photographing device 200 wirelessly or wiredly.

Further, the computing apparatus 100 may include a sound input device 250, for example, a microphone, and may be linked with an external sound input device 250 wirelessly or wiredly.

Further, the computing apparatus 100 may be wirelessly or wiredly linked to or include a gimbal 300 that performs a function of controlling the posture of the photographing device 200 and/or the sound input device 250.

To control the posture of the photographing device 200 and/or the sound input device 250, the gimbal 300 may include the photographing device 200 and/or the sound input device 250, or include a predetermined mechanism (e.g., a suction plate) capable of fixing the photographing device 200 and/or the sound input device 250. For example, the photographing device 200 and the sound input device 250 may be integrated or combined with each other, but may also be separate from each other, and this case, the gimbal 300 may control the posture of the photographing device 200 or not control the posture of the sound input device 250, or a second gimbal 350 controlling the posture of the sound input device 250 may be further included in addition to the gimbal 300 controlling the posture of the photographing device 200.

The gimbal 300 may include one or more rotational axes for the control of the posture, so an example thereof may be found in Korean Patent Unexamined Publication 10-2019-0036323. The gimbal 300 may actively improve an input range of the photographing device 200 and/or the sound input device 250 through posture control.

When the gimbal 300 has one rotational axis, the rotation axis may be a yaw axis Y. The yaw axis enables the photographing device 200 and/or the sound input device 250 to interact with an object in a space only with minimum rotation.

When the gimbal 300 has two axis of rotation, the axis of rotation may be a yaw axis and a pitch axis (P). Additionally, when the gimbal 300 has three axis of rotation, the axis of rotation may be a yaw axis, a pitch axis, and a roll axis R.

The gimbal 300 may include a power supply unit 310 as a component of hardware thereof. The power supply unit 310 may receive external power by wired or wireless means, and by direct or alternating current. Power supplied to the power supply unit 310 may be used by the gimbal 300 or the computing apparatus 100. Additionally, the power supply unit 310 may be used to charge a battery embedded in the gimbal 300 or a battery embedded in the computing apparatus.

Additionally, the gimbal 300 may include at least one gimbal motor 330 (not illustrated) as a component of hardware thereof. Each of the gimbal motors 330 is configured to change the direction of the photographing device 200 and/or the sound input device 250 or the computing apparatus 100 on which the photographing device 200 and/or the sound input device 250 is embedded according to the aforementioned axis of rotation, and the gimbal motor 330 may be, but are not limited to, a DC motor, an operation motor, and a brushless motor. The gimbal 300 may further include a gimbal motor 330 as well as a gear for converting the torque of the motor.

The motor 330 of the gimbal 300 is used to allow the photographing device 200 and/or the sound input device 250 or the computing apparatus 100 attached to the gimbal to pursue a direction of a specific object, so it will be desirable that the respective rotational axes are disposed to be parallel to respective axes such as a yaw, a pitch, a roll, an axis, etc., of the photographing device 200 and/or the sound input device 250, or the computing apparatus 100, but those skilled in the art will be able to easily understand that the present disclosure need not be limited thereto.

The gimbal 300 may further include at least one sensor 340 (not illustrated) as a hardware component thereof. The sensor 340 may perform a function of detecting one or more of position, angular position, displacement, angular displacement, speed, angular speed, acceleration, and angular acceleration with respect to a fixed portion of the gimbal 300 or the motor 330, and types of the sensor 340 may include, but are not limited to, acceleration sensors, magnetic sensors such as gyro sensors, geomagnetic sensors, Hall sensors, pressure sensors, infrared sensors, proximity sensors, motion sensors, photosensitive sensors, image (video) sensors, GPS sensors, temperature sensors, humidity sensors, barometric pressure sensors, LIDAR sensors, and the like.

The sensor 340 that cannot be mounted on the computing apparatus 100 due to limitations on the weight and volume of the computing apparatus 100, particularly, the portable computing apparatus, may be mounted on the gimbal 300, and the sensor 340 may be used to obtain information about the environment around the gimbal 300.

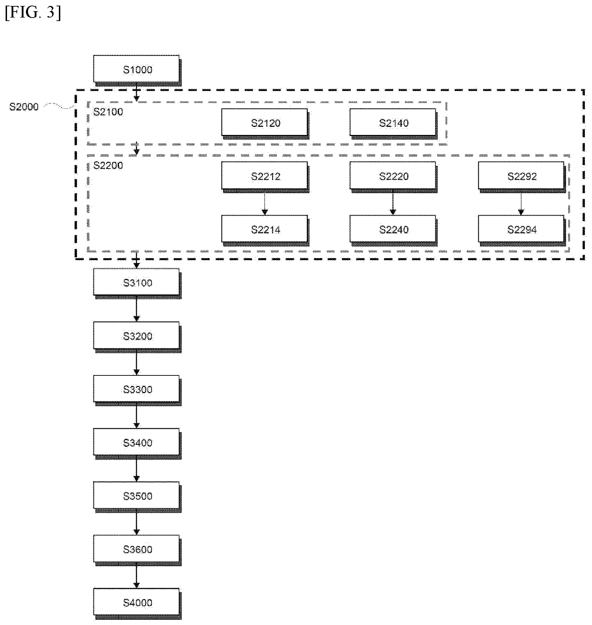

Now, specific functions and effects of the present disclosure that can be achieved by the individual components schematically described with reference to FIG. 2 will be described in detail later with reference to FIGS. 3 to 5. While the components illustrated in FIG. 2 are illustrated as being realized on a single computing apparatus for ease of description, it will be understood that the computing apparatus 100 performing the method of the present disclosure may be configured so that a plurality of devices is interlocked with each other. For example, the gimbal 300 may be configured to be an independent computing apparatus such that the gimbal 300 and the computing apparatus 100, such as a portable computing apparatus such as a portable terminal, may be interlocked with each other, and in this case, the gimbal 300 may perform at least some of the functions performed by the portable terminal 100. In other words, those skilled in the art would be able to configure a plurality of devices to be interlocked with each other to perform the method of the present disclosure in a variety of ways.

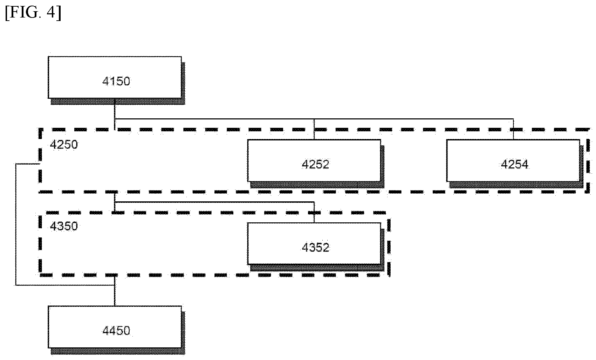

FIG. 3 is a flowchart exemplarily illustrating a sound processing method according to an embodiment of the present disclosure, and FIG. 4 is a block diagram exemplarily illustrating modules that perform each step of the sound processing method according to an embodiment of the present disclosure.

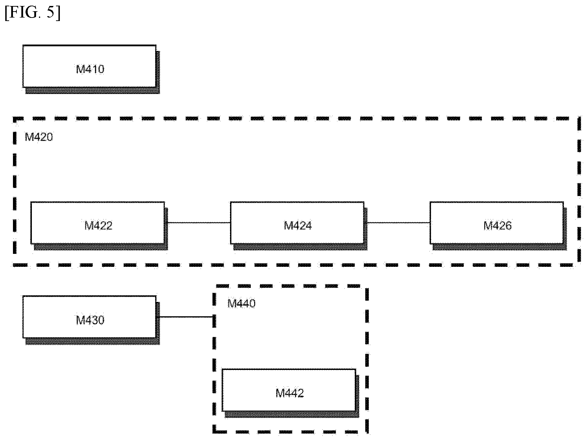

Further, FIG. 5 is a block diagram exemplarily illustrating machine learning models used in modules for the sound processing method according to an embodiment of the present disclosure.

Referring to FIG. 3, the sound processing method according to the present disclosure first includes a sound acquisition step S1000 which is a step in which a sound input module 4150 implemented by a computing apparatus 100 acquires an entire sound ('sound') from a sound input device 250 included in the computing apparatus 100 or linked through a communication unit 110 of the computing apparatus 100. According to some embodiments of the present disclosure, the processor 120 may acquire a sound including at least one sound object.

Here, `entire sound' ('sound') refers to a sound that are in contrast to a sound that is a part of the entire sound ('sound'), such as an object sound to be described below.

Next, the sound processing method further includes a step S2000 of processing a sound to generate sound processing information from the entire sound ('sound') using the sound processing module 4250 implemented by the computing apparatus 100.

Step S2000 of processing the sound may include a category classifying step S2100 of detecting one or more sound objects shown in the entire sound ('sound'), and performing a classification of calculating categories of the respective detected sound objects by the computing apparatus 100.

Here, the category of the object may mean a class or range with corresponding properties. For example, the category of the object may refer to a result of classifying the object as a person, tree, dog, etc. As an example, if a person makes a verbal or non-verbal sound, this may be a sound object.

Further, the object may include a spatial object, which is an object corresponding to a 'space' in which the object exists. Detailed classification information of the spatial object may include information on the corresponding space. When the spatial object is handled by the sound, the spatial object is an object corresponding to the space in which the sound existed.

The category classifying step S2100 may include a step S2120 of calculating, by the spatial module 4252 implemented by the computing apparatus 100, the category of the spatial obj ect based on categories of other sound objects other than the spatial object if the object is the spatial object.

Further, the category classifying step S2100 may include a step S2140 of calculating at least one of the categories and/or location information of the respective sound object by inputting the entire sound ('sound') into an object classification model. Among them, a specific method of calculating the location information of the respective sound objects will be described below in detail.

The location information may include information related to the location of the sound object. For example, the location information may include at least one of a direction, an angle, a distance, and a location of the sound object. However, the location information is not limited to this and may include various data related to the location of the sound object.

Continuing to refer to FIG. 3, the sound processing step S2000 may further include a detailed classification step S2200 of generating detailed classification information including at least one of characteristics and/or a state of the object as an analysis result for each sound object by the detailed classification module 4350 implemented by the computing apparatus 100.

### Property and state of the object

A property of the object refers to a property of the object that is largely invariant over time, while a state of the object refers to a property of the object that is largely changeable over time.

Specifically, the property of the object may include information about a partial object that forms a part of the object or is a constituent element attributed to the object. For example, when a person is detected as an object in the full image, parts of the person's arms, legs, eyes, and/or the like and the clothes and/or shoes the person is wearing are partial objects of the object.

For detection of the partial objects, the detailed classification step S2200 may include a step S2292 of attempting to, by the partial object classification module 4254 implemented by the computing apparatus 100, detection of a partial object forming a part of the sound object or as an attributed component of the sound object; and a step S2294 of further generating at least one of the analysis results of characteristics and/or state for the partial object as part of the detailed classification information when the partial object is detected. According to some embodiments of the present disclosure, when the partial object is detected, the processor 120 may further generate an analysis result of at least one of the characteristics and/or state of the partial object included in the first detailed classification information. The partial object may be a part of an object (e.g., at least one sound object, at least one image object, etc.), or an attributed component of the object.

According to some embodiments of the present disclosure, the characteristics of at least one sound object may be a property of at least one sound object that is invariant with respect to time.

According to some embodiments of the present disclosure, the characteristics of at least one sound object may be a property of at least one sound object that is invariant with respect to the time except for a category of each of at least one sound object. For example, the characteristics of at least one sound object may include at least one of a glottal of at least one sound object, a sub body that is information referring to the partial object of at least one sound object, a main body which is information referring to the other object when at least one sound object is a partial object of the other object, and/or whether at least one sound object is self-movable.

The state of at least one sound object may be a property of the at least one sound object that is variable with respect to the time. For example, the state of at least one sound object may include at least one of the location of at least one sound object, the direction of at least one sound object, the angle of at least one sound object, the distance of at least one sound object, and/or a velocity of at least one sound object.

The characteristics of at least one image object may be a property of at least one image object invariant with respect to time, except for the category of each of at least one image object. For example, the characteristics of at least one image object may include at least one of information referring to the partial object of at least one image object, information referring to the other object when at least one image object is a partial object of the other object, and/or whether at least one image object is self-movable.

The state of at least one image object may be a property of the at least one image object that is variable with respect to the time. For example, the state of at least one image object may include at least one of the location of at least one image object, the direction of at least one image object, and/or the velocity of at least one image object.

Characteristics according to a combination of at least one sound object and at least one image obj ect may be a property invariant with respect to the time, except for the category (e.g., a category for each of at least one sound object, a category for each of at least one image object, etc.). For example, the characteristics according to the combination of at least one sound object and at least one image object may further include at least one of the size of the object (at least one of the at least one sound object and/or at least one image object), one or more materials of the object including a main material of the object, and a transparency of the object, and/or a text displayed on the surface of the obj ect.

The size of the object may be a size measured by two-dimensional measurement or three-dimensional measurement. In addition, the transparency of the object is a property of the object when the object is an object having a transparent part, such as a glass window, and for example, an opaque object may have a value of 0, and an object made of a transparent material such as glass may have a positive value.

The state according to the combination of at least one sound object and at least one image object may be a property which is variable with respect to the time. For example, the state according to the combination of at least one sound object and at least one image object may include at least one of the posture of the object, the action of the object, and/or whether the object touches a floor.

The location of the object may be a location which may be confirmed or estimated using the sound.

The posture of the object may be estimated based on an interrelationship of location information of partial objects of the object.

The action of the object may be estimated from a temporally continuous posture.

The direction of the object may be estimated based on at least one of the location information of the object and/or the action of the object.

Whether the object touches the floor may indicate whether the object touches a floor plane of the spatial object to which the object belongs. For example, when a chair, a desk, an electric pole, a tire of a car, and the like have a true value, the processor 120 may determine that the object touches the floor.

The processor 120 may generate integrated object information in which information on the sound and/or image objects is combined into one.

For example, when the acquired information on the sound and/or image objects (or information on sound and/or image objects which are separately marked and separately present) is information on the same object, the processor 120 may generate the integrated object information in which the information on the acquired sound and/or image objects is combined into one.

As another example, the processor 120 may generate integrated object information including an object information table. The object information table may be an area formed by at least one row and at least one column to store the object information. The processor 120 may input and store processing information for the sound and/or image into the object information table.

The detailed classification information of the object may further include an attribute referring to information related to system input/output of the object as well as the property and the state. The attributes of the object may include at least one of a data entry time including a time at which the raw data of the object was first entered, and/or an authorization to operate the system according to the present disclosure granted to the obj ect.

In order to generate the detailed classification information of the sound object, the detailed classification step S2200 may include a step S2220 of selecting, so as to acquire the characteristics and/or the states of respective sound objects corresponding to individual categories to which individual sound objects shown in the entire sound ('sound') belong, a detailed classification model M440 which is a set of models constituted by at least one model pre-trained to suit sound analysis of the individual categories, by using the classification model selection module 4352; and a step S2240 of generating identifiers of the individual sound objects and an object record including the detailed classification information as an object record which belongs to the individual sound objects through the identifiers by inputting individual object sounds which are sounds of the individual sound objects into the selected detailed classification model M440.

Here, the detailed classification model M440 is intended to distinguish one or more objects from each other, or in other words, each of the objects may be given an identifier that distinguishes each of the objects from each other, as the detailed classification information generated by the detailed classification model M440.

In addition, the object record refers to a record that includes information attributed to each obj ect's identifier. As an example of the information attributed to each object's identifier, if the object is a person, the information attributed to each object's identifier may include the person's facial shape, height, gait, tattoos, hairstyle, and/or the like, and if the object is a dog, the information attributed to each object's identifier may include the dog's head shape, shape and/or color of the fur, and breed. The object record may include information about another object that belongs to each object, which may be an identifier of another object.

The step S2220 of selecting the detailed classification model M440 with respect to the respective individual sound objects may be performed by the classification model selection module 4352 implemented by the computing apparatus 100. The classification model selection module 4352 performs a function of selecting a detailed classification model suitable for the category after the category of the object is acquired jointly with an algorithm applied to the detailed classification model.

As an example, if the individual sound object is the spatial object, the object classification model M430 first classifies whether the space of the spatial object is indoor or outdoor in the category classifying step S2100, and then in the detailed classification step S2200, the classification model selection module 4352 may select an indoor detailed classification model as the detailed classification model M440 if the space of the spatial object is indoor, while selecting an outdoor detailed classification model as the detailed classification model M440 if the space of the spatial object is outdoor.

Further, in step S2240, in order to generate the characteristics of the sound object, the detailed classification model M440 may further include an advanced characteristic model M442 for calculating at least one of information on a partial object which is a component forming a part of the sound object or belonging to the sound object, advanced classification information advancingly classifying the category of the sound object, a sub body of the sound object, a main body of the sound object, an emotional state of the sound object, a conversation detected from a voice of the sound object, a voiceprint which is a feature of the voice or a non-verbal sound of the sound object, a location of the sound object, and/or whether the sound object is self-movable.

Here, the emotional state refers to a state such as excitement, anger, surprise, etc., which are determined from the voice.

Meanwhile, the location of the sound object may be tracked from location information of a sound source, so a scheme thereof will be described below in detail.

Here, the advanced classification information of the object refers to information acquired by advancingly classifying the category of the object, and for example, the category of the object is a dog, the advanced classification information may be a breed of the dog. As another example when the category of the object is a person, the advanced classification information may be a specific individual.

Context may refer to at least one information related to a given object. For example, the context may describe a state of the object and a purpose of an action. As an example thereof, if the sound processing module 4250 receives a recorder sound from a music room, the sound processing module 4250 may output a sentence `a person in the music room is playing a recorder' or a signal corresponding thereto as the context. However, the context is not limited thereto.

According to some embodiments of the present disclosure, the processor 120 may generate the sound processing information from the sound by using the sound processing module 4250. The sound processing information may be information on a context related to at least one of verbal information and/or non-verbal information included in the sound. For example, the sound processing information may include detailed classification information of an object that is modified and/or affected after context processing. The detailed classification information of the object may include at least one of the characteristics, the state, and/or the property. As another example, the sound processing information may include at least one of semantic classification information detected by interpreting the language included in the sound and/or information detected by interpreting the non-verbal sound included in the sound. The processor 120 may classify a first category of each of at least one sound object. The processor 120 may generate first detailed classification information including at least one of the characteristics which are the property of at least one sound object which is invariant with respect to the time or the state which is the property of at least one sound object which is variable with respect to the time except for the first category.

Specifically, the sound processing module 4250 may include at least one of a sound processing model M410 and/or a sound interpreter M420 connected to the sound processing model M410. In this case, the detailed classification step S2200 may include a step S2212 of selecting the sound processing model M410 suitable for the category of the sound object, and a step S2214 of acquiring at least one of the verbal information and/or the non-verbal information by inputting the entire sound ('sound') into the sound interpreter M420.

More specifically, the sound interpreter M420 may include a language processor M422 that detects the semantic classification information by interpreting the language included in the entire sound ('sound'). The language processor M422 may include a context detection model that detects a context corresponding to the language.

In addition, the sound interpreter M420 may further include a non-verbal processor M424 that detects at least one of an emotion, a priority, a location, a direction, and/or a voiceprint of the sound object by interpreting the non-verbal sound included in the entire sound ('sound'). The non-verbal processor M424 may include, for example, at least one of an object classification model, a classification model selection model, an advanced characteristics model, a partial object classification model, a spatial model, or a context detection model. However, the non-verbal processor M424 is not limited thereto and may include various models that interpret the non-verbal sound.

In addition, the sound interpreter M420 may further include an STT model M426 that converts the context into a text based on a detection result of at least one of the language processor M422 and/or the non-verbal processor M424. The STT model M426 does not just convert a voice language into a symbol such as the text as in a widely conventional prior art, but may perform the function of converting the context into the text, which may also be referred to as a context-to-text (CTT) model M426.

Specifically, the context may be an object context including one or more context interaction objects which are sound objects detected as interacting with the individual sound objects by at least one of the conversation and/or the non-verbal sound of each of the individual sound object shown in the entire sound ('sound'). However, the context is not limited thereto. The context interaction object may be identified by context detection of the language processor M422 or by context detection of the non-verbal processor M424, and identified by cooperative context detection of the language processor M422 and the non-verbal processor M424.

Further, the context may be a spatial context including at least one of a spatial object shown in the entire sound ('sound') and a place which is the type of spatial object inferred from each of individual sound objects except for the spatial object, at least one of a conversation and/or non-verbal sound of each of the individual sound objects, and at least one of an actor which is an individual sound object corresponding to a main body of the interaction and/or a context interaction object which is a sound object detected to interact with the individual sound object by the interaction.

In an embodiment, matching the sound and the context for determining the context from the conversation or the non-verbal sound may be implemented as supervised learning using an artificial neural network model. For example, the artificial neural network model may be trained by using continuous sounds as input data and using training data in which language interpretation (i.e., data expressed in the language) including at least one of the object context and/or the spatial context is labeled as output data which is a correct answer.

### Priority

Now, the priority of the object, which is closely related to the order of processing when processing the object, will be described in detail. For example, the processor 120 may perform processing such as input, output, operation, and storage according to the priority. Importance may be calculated as a value that is handled to assign the priority, so typically, after calculating the importance of each object, the order based on the importance may be set as the priority.

The priority of the sound object may include an authority based priority designated for each of the sound objects based on the authority of the sound object. This is to assign the priority according to the authority of each classified sound object, so for example, if the sound object which is a specific user has the highest authority for the system of the present disclosure, a high priority is assigned to the specific user.

The authority based priority may be calculated by performing a step of determining whether the sound object is a predetermined authorizer to handle the computing apparatus based on the characteristics of the sound object analyzed using the detailed classification model M440, or determining whether the sound object is the authorizer through voice authorization of the sound object, and a step of setting, if the sound object is the predetermined authorizer, a ranking predetermined for the authorizer as the authority based priority of the sound object.

For example, when the authorizer is a person (or the authorizer belongs to a person category), the sound object which is the person, that is, a sound object in which the conversation detected as the non-verbal sound may be first detected, and the authority based priority may be set only for the detected sound object which is the person.

Further, the computing apparatus of the present disclosure may specify an individual among a plurality of persons using the above-described advanced classification information, so to specify the individual, characteristics unique to the object, such as the voiceprint of the sound object may be used, or the characteristics of a partial object of the sound object may be used or an object record of the sound object may be used.

Meanwhile, the priority of the sound object may be a classification based priority designated for each of object sets classified according to at least one characteristic including at least the category of the sound object among the characteristics of the sound object or the advanced classification information of the sound object.

Classification-based priority may be a preset priority given to categories, such as people, animals, and other objects, or advanced classification information, which may be manually set by an authorized person of the system. As another example, the computing apparatus of the present disclosure may automatically set a variable priority by category or advanced classification information based on patterns of use of the system of the present disclosure by an authorized person of the system.

Next, the priority of the sound object may include a context based priority designated for each of an object, an object set, or a category including the context of at least one sound object. According to some embodiments of the present disclosure, the priority of the sound object may include a context based priority designated for each of an object, an object set, or a category expressed or specified in the context of at least one sound object.

According to the context based priority, the detailed classification module 4350 performs characteristic or state analysis on one or more objects in the entire sound ('sound') to infer at least one of the object context and/or the spatial context from the entire sound ('sound'), and set, based on whether the sound object is an actor by at least one of the inferred object context and/or spatial context or a context interaction object which is an object detected to interact with the actor, a relatively higher priority to the actor or the context interaction object.

For example, if the spatial context is a context `persons of the child age group are playing a baseball in a playground.', a relatively higher priority may be assigned to a person detected to hit a ball with a baseball bat.

Meanwhile, the priority of the sound object may include a sound intensity based priority determined for each of at least one sound object based on the intensity of the sound of at least one sound object. The sound intensity based priority may be a ranking sequentially determined in the order of greater or smaller sound intensity of the object or the partial object. For example, when an instance of the object or the partial object is classified, the processor 120 may set a higher priority to the corresponding object or partial object as the intensity of the sound generated from the instance of the object or the partial object is the larger based on the sound intensity based priority.

The priority of the sound object may include a sound location information based priority determined with respect to each of at least one sound object based on the location information of the sound of the sound object. A higher priority may be set to the sound location information based priority based on a difference between the sound location information of the object or the partial object and predetermined location information. For example, according to the sound location information based priority, a higher priority may be set as a difference between the sound location information of the object or the partial object and a reference of the predetermined location information is the smaller (the larger). A sound direction may be detected by using a direction recognition algorithm (e.g., a direction recognition algorithm based on a Doppler effect). The location information of the sound may include information related to the location of the sound object. For example, the location information may include at least one of a direction, an angle, a distance, and a location of the sound object. However, the location information is not limited to this and may include various data related to the location of the sound object. The reference of the predetermined location information may be a reference determined based on at least one of a reference point and/or a reference direction. However, the reference of the predetermined location information is not limited thereto, and may be determined based on various elements including image location information, etc.

The priority of the sound object may include a sound action based priority detecting the action of the object or partial object as at least one of a voice, an image, and/or a sensor and determined based on a predetermined importance of the detected action. The predetermined importance may refer to a value determined in advance for each action of the object.

The priority of the image object may include an image authority based priority designated for each of the image objects based on the authority of the image object. This is to assign the priority according to the authority of each classified image object, so for example, if the image object which is a specific user has the highest authority for the system of the present disclosure, a high priority is assigned to the specific user.

The image authority based priority may be calculated by performing a step of determining whether the image object is a predetermined authorizer to handle the computing apparatus 100 based on the characteristics of the image object analyzed using the detailed classification model M440, or determining whether the image object is the authorizer through authorization of the image object, and a step of setting, if the image object is the predetermined authorizer, a ranking predetermined for the authorizer as the image authority based priority of the image object.

Meanwhile, the priority of the image object may be an image classification based priority designated for each of object sets classified according to at least one characteristic including the category of at least one image object among the characteristics of the image object or the advanced classification information of at least one image object.

The image classification based priority may be a priority assigned in advance to categories such as persons, animals, and other objects, or the advanced classification information, so the authorizer of the system may manually set the priority. As another example, the computing apparatus 100 of the present disclosure may variably and automatically set a priority for each category or advanced classification information based on a pattern in which the authorizer of the system uses the system in the present disclosure.

Next, the priority of the image object may include an image context based priority designated for each of an object, an object set, or a category including the context of at least one image object. According to some embodiments of the present disclosure, the priority of the image object may include an image context based priority designated for each of an object, an object set, or a category expressed or specified in the context of at least one image object.

According to the image context based priority, the processor 120 analyzes the characteristics or state on one or more objects through the detailed classification module 4350 to infer at least one of the object context and/or the spatial context from the image, and set, based on whether the image object is an actor by at least one of the inferred object context and/or spatial context or a context interaction object which is an object detected to interact with the actor, a relatively higher priority to the actor or the context interaction obj ect.

Meanwhile, the priority of an image object may include an image size based priority determined based on the image of the object or partial object or an area size detected through the sensor. For example, the size based priority may be a ranking that is sequentially determined in the order of larger area or smaller area based on the area measured in unit of pixels when the instance of the object or partial object is classified. For example, the size based priority may be a ranking that is sequentially determined in the order of larger area or smaller area within a predetermined range based on the area measured in unit of pixels when the instance of the object or partial object is classified. The measurement area may be performed through a 2D or 3D measurement module.

Meanwhile, the priority of the image object may include an image distance based priority determined based on a relative distance or absolute distance from at least one of part of the sound, the image, the object, the partial object, the computing apparatus 100, the photographing device 200, and/or the gimbal 300. At least one of part of the sound, the image, the object, the partial object, the computing apparatus 100, the photographing device 200, and/or the gimbal 300 may be detected through a sensor. The measurement of the distance may be performed through the 2D or 3D measurement module. The relative distance may refer to a distance according to a ratio measured based on at least one of part of the sound, the image, the object, the partial object, the computing apparatus 100, the photographing device 200, and/or the gimbal 300. The absolute distance may refer to a length measured as a predetermined unit based on at least one of part of the sound, the image, the object, the partial object, the computing apparatus 100, the photographing device 200, and/or the gimbal 300.

Meanwhile, the priority of the image object may include an image action based priority detecting the action of the object or partial object as at least one of the voice, the image, and/or the sensor and determined based on a predetermined importance of the detected action. The predetermined importance may refer to a value determined in advance for each action of the object. For example, if an importance of a phone command is 10 and an importance of a falling motion is 6, the processor 120 may process a first object determined to generate the phone command earlier than a second object determined to generate the falling motion.

The processor 120 may include at least one of the priorities of the voice and/or image objects in integrated object information in at least one of the voice processing process and/or the image processing process.

The processor 120 processes one or more of the methods for acquiring the priorities of the voice and/or image objects (e.g., at least one of the authority based priority, the classification based priority, and/or the context based priority) as at least one of sequential processing, parallel processing, and/or recursive processing to set a priority value. The processor 120 may select a priority that has the highest priority or exceeds a certain boundary value among priority values acquired through two or more priority acquisition methods.

The operations and processes described in the present disclosure are not intended to be performed in the order described unless logically contradictory or the context otherwise indicates, and those skilled in the art will understand that each of the operations and processes may be performed simultaneously or at different times. Further, those skilled in the art will be able to understand that in respect to reference numerals including numbers among reference numerals disclosed in the present disclosure, the order of the numbers may not particularly coincide with an order in which steps and processes are performed.

Further, while the above operations may be performed once, preferably the above operations may be performed in real-time and/or iteratively to obtain temporally continuous images, sound and/or sensor information as described above.

That is, the sound processing method of the present disclosure may further include a step S4000 of returning to the sound acquiring step S 1000 in order to acquire a new entire sound ('sound'), and more specifically, in this case, the sound acquiring step S 1000 may be performed again while controlling an available resource by a sound tracking controller 4450.

### Sound tracking

Here, the sound tracking controller 4450 refers to a module that performs a specific function, similar to the sound input module 4150 and the sound processing module 4250, so the system of the present disclosure performs a function of adjusting an orientation of the sound input device, i.e., a function of implementing location and/or direction tracking to allow the sound input device 250 to direct a target object or a target space, and here, the available resource refers to hardware and/or software which enable the tracking, which include the sound input device 250, the gimbal 300, etc. The processor 120 may calculate location information of a sound of each of at least one sound object by using the sound tracking controller 4450.

The context interaction object may be identified by the sound processing module 4250. It is disclosed in a thesis as an example of a model of the sound processing module 4250 that performs this function, an artificial neural network model may be generated through supervised learning Shin, D., & Kim, I. (2018), Deep Image Understanding Using Multilayered Contexts. Mathematical Problems in Engineering, 2018, 1-11 as a non-patent document.

Referring back to FIG. 3, the sound processing method according to the present disclosure may further include a step S3100 of classifying, by the computing apparatus 100, an object-specific sound in the entire sound ('sound') and distinguishing, by the sound tracking controller 4450, an input source corresponding to each object-specific sound, but does not particularly include the step S3100 because only a single input source may be set to be provided or only the single input source may be set to be used.
Here, the input source may include at least one of a directional microphone, a non-directional microphone, a microphone array, and/or a beam forming microphone, but is not limited thereto.

As well known to those skilled in the art, a range in which the directional microphone acquires the sound is narrow and long. Further, the microphone array is an array that includes two or more microphones. An example of the microphone array may be the beam forming microphone. The non-directional microphone acquires the sound without directionality.

Continuing to refer to FIG. 3, the sound processing method according to the present disclosure may further include a location information detecting step S3200 of detecting, by the computing apparatus 100, location information of the object-specific sound which is relative or absolute to the photographing device 200 or the display device 220 linked to the computing apparatus 100. According to some embodiments of the present disclosure, the processor 120 may calculate the location information of the sound of the object by using the sound tracking controller. For example, the processor 120 may calculate location information of a sound of each of at least one sound object by using the sound tracking controller.

Further, in the sound processing method, after the location information detecting step S3200, the computing apparatus 100 may detect the sound object from the entire sound ('sound') according to the priority, for example, (S3300), acquire at least one of a volume, a frequency, and/or a phase of the object-specific sound of the sound object for each input source (S3400), and then induce the sound object to perform pronunciation to specify the sound object (S3500). According to some embodiments of the present disclosure, in the location information detecting step (S3200), at least one of the volume, the frequency, and/or the phase of the object-specific sound of the sound object is acquired for each input source to calculate the direction of the object-specific sound of the sound object. In the information detecting step S3200, data related to the sound for calculating at least one of the direction, the angle, the distance, and/or the location of the sound is not limited thereto.

According to some embodiments of the present disclosure, the processor 120 may acquire at least one of the volume, the frequency, and/or the phase of the sound of the object. For example, the processor 120 may acquire at least one of the volume, the frequency, and/or the phase of the sound of each of at least one sound object. However, the present disclosure is not limited thereto, and the processor 120 may acquire data related to various sounds. The processor 120 induces the object to perform pronunciation to specify the object. For example, the processor 120 induces at least one sound object to perform pronunciation to specify at least one sound object.

Specifically, in the location information detecting step S3200, the computing apparatus 100 may be linked to the gimbal 300 having one or more rotational axes equipped with the photographing device 200 or the display device 220 and controlling the posture of the photographing device 200 or the display device 220.

In order to utilize the gimbal 300, the sound processing method may further include a gimbal control step S3600 of controlling the gimbal based on the calculated location information of the object-specific sound. According to some embodiments of the present disclosure, the processor 120 may control the gimbal 300 based on the location information of the sound of the object. For example, the processor 120 may control the gimbal 300 based on the location information of the sound of each of at least one sound object. The control of the gimbal 300 may mean performing a state change (e.g., an angle change, a location change, etc.) of the gimbal 300 or a state maintaining of the gimbal 300. For example, when the sound object coincides with the direction of a camera linked to the gimbal 300, the processor 120 is capable of confirm the sound object as the image object to maintain the state of the gimbal 300. In this case, the processor 120 may control the gimbal 300 in order to maintain the state of the gimbal 300. As another example, when the processor 120 is capable of confirm the sound object as the image object through front/rear camera switching of the camera linked to the gimbal 300, the processor 120 may not rotate the gimbal 300. In this case, the processor 120 may control the gimbal 300 in order to prevent the gimbal 300 from rotating.

More specifically, the computing apparatus 100 may detect the sound object from the entire sound ('sound') according to the priority, for example, in the location information detecting step S3200, and the computing apparatus 100 queries the sound object as to whether the sound object is a generation source of the sound and check whether an image object (i.e., an object identified as the image) which performs pronunciation is the same as the sound object through image tracking using the gimbal 300 controlling the photographing device 200 in the gimbal control step S3600. Here, the image object which becomes a target of the query is not limited to the person, so the image object may be, for example, a separate IoT device. According to some embodiments of the present disclosure, the processor 120 may query the object as to whether the object is the generation source of the sound and confirm whether the object is the generation source of the sound. For example, the processor 120 may query a first sound object among at least one sound object as to and confirm whether the first sound object is the generate source of the sound. The processor 120 may confirm whether the object which performs pronunciation (e.g., an object identified as an image) is an object corresponding to the first sound object through image tracking using the gimbal 300 that controls the photographing device 200.

Meanwhile, when the input source is a directional microphone or a microphone array, the computing apparatus 100 may control the direction of the system according to the location information of the sound object calculated based on the object-specific sound in the gimbal control step S3600. It is described in a thesis Buck, M. & Rossler, M. (2001), FIRST ORDER DIFFERENTIAL MICROPHONE ARRAYS FOR AUTOMOTIVE APPLICATIONS as the non-patent document that the direction of the sound object may be calculated by using the microphone array.

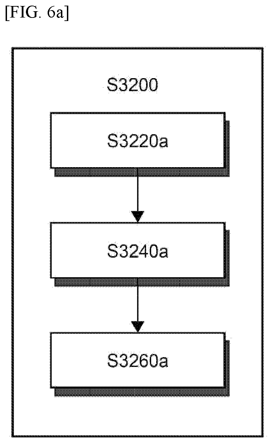

FIGS. 6A to 6C are flowchart more specifically illustrating the location information detecting step S3200.

As an embodiment, when the input source is a microphone array including two or more individual microphones, the computing apparatus 100 may detect at least one sound object with respect to respective sounds acquired by the individual microphones (S3220a), acquire at least one of the volume, the frequency, and/or the phase of the object-specific sound of the sound object for each of the individual microphones (S3240a), and then calculate the location of the sound object based on at least one of the volume, the frequency, and/or the phase (S3260a), in the location information detecting step S3200, so this is illustrated in FIG. 6A. However, data related to the sound for calculating the location is not limited to at least one of the volume, the frequency, and/or the phase of the object-specific sound, and may include data related to various sounds.

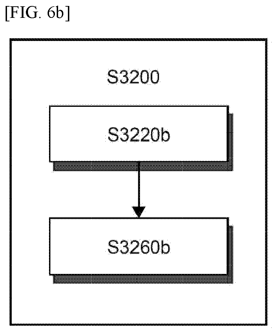

As another embodiment, when the input source is the directional microphone directly mounted on the gimbal linked to the computing apparatus or mounted on the photographing device or display device, the computing apparatus 100 may detect the sound object from the entire sound ('sound') acquired by the directional microphone according to the priority, for example (S3220b), and determine at least one of the location information of the sound object by acquiring at least one of the volume, the frequency, and/or the phase of the object-specific sound of the sound object while controlling the direction of the directional microphone as the gimbal 300 (S3260b), in the location information detecting step S3200, so this is illustrated in FIG. 6B. However, data related to the sound for determining the location information is not limited to at least one of the volume, the frequency, and/or the phase of the object-specific sound, and may include data related to various sounds.

This uses a principle that the closer the directional microphone is pointed at the sound object, the greater the volume acquired from the sound object. Of course, at least one of the location information of the sound object may be determined based on not only the volume but also the frequency or the phase difference between the frequencies. However, data related to the sound for determining the location information is not limited to at least one of the volume, the frequency, and/or the phase of the object-specific sound, and may include data related to various sounds.

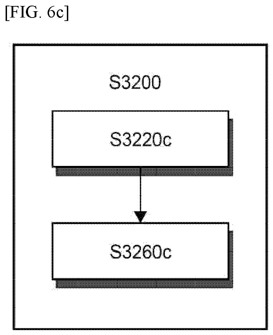

As yet another embodiment, in the location information detecting step S3200, the computing apparatus 100 may detect the sound object from the entire sound ('sound') acquired by the input source according to the priority, for example (S3220c), and then may determine at least one of the direction and/or the location of the sound object by using at least one of (i) object classification tracking, (ii) sound generation motion tracking, and/or (iii) pronunciation action pattern tracking (S3260c), so this is illustrated in FIG. 6c. Here, the input source may be, for example, a non-directional microphone, but is not limited thereto.

The object classification tracking is tracking for determining whether object classification based on the image is the same as object classification based on the sound, so to this end, the category or detailed classification information of the sound object, and the category or detailed classification information of the image object detected from the image acquired by the photographing device 200 may correspond to each other.

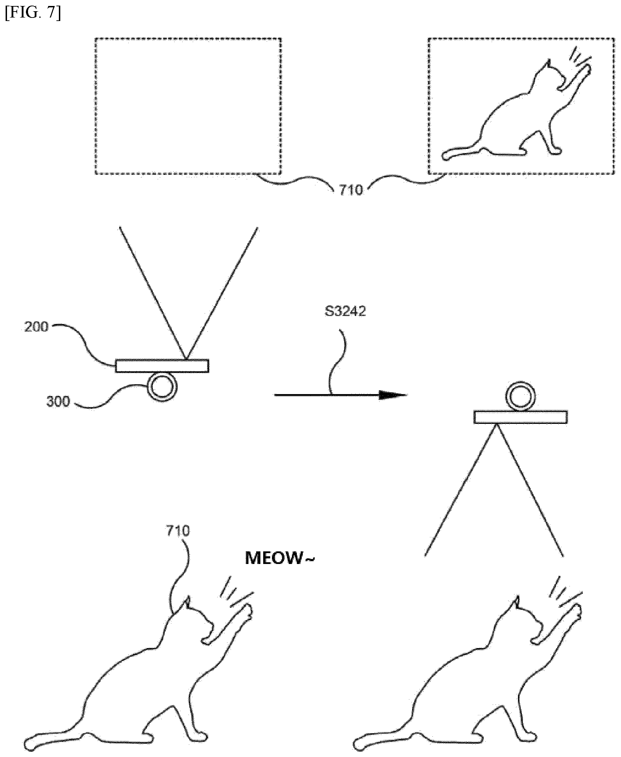

FIG. 7 is a diagram exemplified for describing a scheme of performing the location information detecting step using object classification tracking in the sound processing method according to an embodiment of the present disclosure.

As illustrated in FIG. 7, when a non-verbal sound (indicated as 'meow') of a cat 710 which is the sound object is input into the microphone 250, the computing apparatus 100 classifies the category of the sound object to identify that the sound object is the cat or that the sound object is a specific cat at through detailed classification. Then, the computing apparatus 100 searches for and identifies image objects in an image 720 acquired by the photographing device 200 (S3242), and confirms whether the image object corresponds to the same category 'cat' or corresponds to 'specific cat' which is the same detailed classification. In other words, the image object and the sound object correspond to each other.

Here, the search may be performed by controlling the direction of the photographing device 200 by controlling the gimbal 300. The control of the gimbal 300 may mean performing a state change (e.g., an angle change, a location change, rotation, etc.) of the gimbal 300 or a state maintaining of the gimbal 300. For example, when the sound object coincides with the direction of the photographing device 200 linked to the gimbal 300, the processor 120 is capable of confirm the sound object as the image object to maintain the state of the gimbal 300. In this case, the processor 120 may control the gimbal 300 in order to maintain the state of the gimbal 300. As another example, when the processor 120 is capable of confirm the sound object as the image object through front/rear camera switching of the photographing device 200 linked to the gimbal 300, the processor 120 may not rotate the gimbal 300. In this case, the processor 120 may control the gimbal 300 in order to prevent the gimbal 300 from rotating.

In short, the object classification tracking may be performed by searching for an image object having the same category or detailed classification information as the category or detailed classification information for the sound object for which the category or detailed classification information is acquired.

As an alternative, the object classification tracking may also be performed by comparing whether the category or detailed classification information of the image object and the category or detailed classification information of the sound object match each other, for a sound object recognized while searching or monitoring the image object, and matching the image object and the sound object with each other.

Here, monitoring may mean performing at least one of acquiring and/or processing the image of the object by the computing apparatus 100. For example, the monitoring may mean that the computing apparatus 100 performs at least one of acquiring and/or processing the image of the object by the photographing device 200.

According to some embodiments of the present disclosure, the processor 120 may acquire an image including at least one image object. The processor 120 may classify a second category of each of at least one image object. The processor 120 may generate second detailed classification information including at least one of a characteristic or a state that is the property of at least one image object. A process of acquiring the above-described image, classifying the second category, and generating the second detailed classification information (image processing process) may be performed in parallel to or sequential with the process of acquiring the sound and generating the sound processing information (sound processing process). For example, the processor 120 may perform the image processing process and the sound processing process in parallel (for example, simultaneously perform the image processing process and the sound processing process). As another example, the processor 120 performs the image processing process and performs the sound processing process to sequentially perform the processes. As yet another example, the processor 120 performs the sound processing process and performs the image processing process to sequentially perform the processes.

A processing methods of a module performed in at least one of the sound processing process and/or the image processing process may include at least one of sequential processing of processing the processes sequentially with each other, priority processing of processing the processes according to a predetermined priority, parallel processing of processing the processes in parallel to each other, and/or recursive processing of processing the processes by using a result value again. For example, the processor 120 may process two or more of the sound processing model M410, the sound interpreter M420, the object classification model M430, and/or the detailed classification model M440 included in the sound processing module 4250 through at least one processing method of the sequential processing, the priority processing, the parallel processing, and/or the recursive processing. As another example, the processor 120 may process two or more of a lower model belonging to the sound processing model M410, a lower model belonging to the sound interpreter M420, a lower model belonging to the object classification model M430, and/or a lower model belonging to the detailed classification model M440 included in the sound processing module 4250 through at least one processing method of the sequential processing, the priority processing, the parallel processing, and/or the recursive processing. As yet another example, the processor 120 may process two or more of the models included in the sound processing module 4250 and the models included in the image processing module for image processing through at least one processing method of the sequential processing, the priority processing, the parallel processing, and/or the recursive processing. As still yet another example, the processor 120 may process two or more of lower models of the models included in the sound processing module 4250 and lower models of the models included in the image processing module for image processing through at least one processing method of the sequential processing, the priority processing, the parallel processing, and/or the recursive processing.

For example, the processor 120 may perform sequential processing of sequentially inputting information of which processing is completed in the sound processing model M410 and information generated during processing into the sound interpreter M420.

As another example, the processor 120 may perform processing according to the priority, which performs processing such as input, output, operation, and storage according to the priority, by setting the priority according to the importance assigned to the object.

As yet another example, the processor 120 may perform parallel processing in which the sound interpreter M420 and the object classification model M430 perform processing such as input, output, operation, and storage in parallel.

As still another example, the processor 120 inputs the result value of the input data calculated through processing of at least one model (e.g., sequential processing, priority processing, parallel processing, etc.) into a layer of a specific model (or specific module), and recursively process the result value. Further, the processor 120 may determine the priority of the object input through processing (e.g., sequential processing, priority processing, and parallel processing) of at least one model, and input information on the input object into another model (or module) and recursively process the information.

The processor 120 may match at least one sound object and at least one image object with each other based on at least one of a first category of each of at least one sound object, a second category of each of at least one image object, first detailed classification information of each of at least one sound object, and/or second detailed classification information of each of at least one image object. The processor 120 may match at least one sound object and at least one image object to each other by capturing a sound generation motion of at least one image object. The processor 120 may match the sound object and the image object by comparing an individual sound of each of at least one sound object and a sound generation motion of each of at least one image object.

More specifically, (i) the computing apparatus 100 searches for or monitors the image object using the photographing device 200, and (ii) recognizes the sound object to acquire the sound object. (iii) When the category or detailed classification information of the image object and the category or detailed classification information of the sound object coincide with each other as a result of comparison, the image object and the sound object are matched to each other.

In addition, if a time interval between (i) and (ii) belongs to a predetermined range or matches a predetermined numerical value, the number of image objects and sound objects to be compared in (iii) may be reduced.

In addition, in order to assist with the matching in (iii) above, a time in the image data and a time in the sound data may be synchronized with each other by a scheme of statistically reflecting a time required for processing the image data and a time required for processing the sound data.

A difference between a time required for acquiring the image object and a time required for acquiring the sound object according to a distance between the photographing device 200, the sound input device 250, and the object is calculated in addition to the time required for processing the data to reduce the number of sound objects to be compared in (iii) above, or match the time in the image data and the time in the sound data with each other.

For example, the distance between the photographing device 200 and the image object may be measured through image measurement of the image data, and when the sound is generated from the image object, a delay time by the distance between the sound input device 250 and the image object generated by a space propagation velocity of the sound, i.e., a sound delay time may be calculated. Then, if a difference between the time at which the sound is acquired and the time at which the sound generation motion occurs coincides with the sound delay time, it may be determined that the sound object corresponding to the sound and the image object that generates the sound generation motion match each other.

In addition, the sound generation motion tracking is tracking to identify an image object that performs the sound generation motion and determine whether the image object is the same as the sound object, so to this end, the sound generation motion of the image object detected in the image is captured to match the sound object and the image object with each other.

Specifically, the sound generation motion tracking may be performed by searching for an image object having the same category or detailed classification information as the category or detailed classification information for the sound object for which category or detailed classification is acquired, and recognizing the sound generation motion of the image object, and then confirming whether the sound object is an object which is the same as the image object which performs the sound generation motion.

Here, the sound generation motion may be, for example, at least one of gestures, walking, speaking, and/or collision between objects, but is not limited thereto.

As an alternative, the sound generation motion tracking may be performed by detecting (recognizing) the sound generation motion of the image object by searching for or monitoring the image object from the image, and comparing whether at least one of the category and/or detailed classification information of the image object identified from the image object in which the sound generation motion is detected and at least one of the category and/or detailed classification information of each of the individual sound objects shown in the entire sound ('sound') match each other to match the image object in which the sound generation motion is detected and one of the individual sound objects with each other.

More specifically, (i) searching for or monitoring, by the computing apparatus 100, the image object using the photographing device 200 includes (ii) monitoring whether the image object takes the sound generation motion, and (iv) the sound object is acquired in parallel to (iii) detecting the sound generation motion as a result of the monitoring, (v) When the category or detailed classification information of the image object showing the sound generation motion and the category or detailed classification information of the sound object coincide with each other as a result of comparison, the image object and the sound object are matched to be the same as each other.

In addition, if a time interval between (iii) and (iv) belongs to a predetermined range or matches a predetermined numerical value, the number of sound objects to be compared in (v) above may be reduced.

In addition, in order to assist the matching in (v) above, the time in the image data and the time in the sound data may be synchronized with each other by the scheme of statistically reflecting the time required for processing the image data and the time required for processing the sound data.

A difference between a time required for acquiring the image object and a time required for acquiring the sound object according to a distance between the photographing device 200, the sound input device 250, and the object is calculated in addition to the time required for processing the data to reduce the number of sound objects to be compared in (v) above, or match the time in the image data and the time in the sound data with each other.

For example, the distance between the photographing device 200 and the image object may be measured through image measurement of the image data, and when the sound is generated from the image object, a delay time by the distance between the sound input device 250 and the image object generated by a space propagation velocity of the sound, i.e., a sound delay time may be calculated. Then, if a difference between the time at which the sound is acquired and the time at which the sound generation motion occurs coincides with the sound delay time, it may be determined that the sound object corresponding to the sound and the image object that generates the sound generation motion match each other.

In addition, the pronunciation action pattern tracking is tracking to determine whether the image object and the sound object are the same by confirming whether a moving pattern of the image object or a partial object of the image object matches the pronunciation pattern, so to this end, the sound object and the image object may be matched with each other by comparing the object-specific sound of the sound object and the sound generation motion of the image object.

For example, the pronunciation action pattern tracking may recognize the sound generation motion of the image object. The pronunciation action pattern tracking may be performed by searching for a pronunciation part object corresponding to the sound generation motion in the sound object which matches the image object, and then confirming whether the pattern of the sound generation motion matches the pattern of the object-specific sound of the sound object. The pronunciation action pattern tracking may confirm whether the sound object matches the image object which performs the sound generation motion.

For example, if a sound of a person speaking is a sound object and a person acquired as the image is an image object, the sound pattern is language information converted to STT, and the pronunciation part object may be a mouth of the person which is the image object. The pattern of sound generation motion may be one or more mouth shapes or mouth shape change patterns related to vocalization.

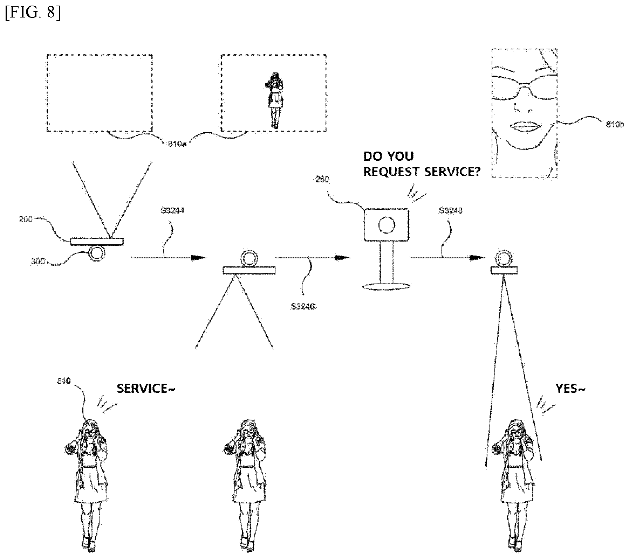

FIG. 8 is a diagram exemplified for describing a scheme of performing the location information detecting step using pronunciation action pattern tracking in the sound processing method according to an embodiment of the present disclosure.

As illustrated in FIG. 8 , when a voice or conversation (indicated as 'service') of a person 810, which is a sound object, is input to the microphone 250 (S3244), the computing apparatus 100 may make a query for specifying the person 810 through, for example, the speaker 260 (S3246). In FIG. 8, "Do you request a service?" is shown as an example of the query.

After the query, the computing apparatus 100 tracks a movement of a mouth of an image object (S3248), and extracts contents of a voice pronounced from image data 810a and 810b, and simultaneously acquire sound data to acquire a sound pattern. As a result, the computing apparatus 100 may confirm whether a specific image object is a sound object which speaks a voice 'service". However, pronunciation action pattern tracking is not limited to matters illustrated in FIG. 8.

The pronunciation action pattern tracking may be triggered by the voice or conversation of the person as in step S3244, but may also be triggered by an input of an image (a gesture of the person or a text indicated in the object) into the computing apparatus 100, an input of a physical touch for a display device (e.g., a touch screen) or a sensor (e.g., an acceleration sensor or a pressure sensor) included in or linked to the computing apparatus 100, and an input of a network signal for the communication unit 110 of the computing apparatus 100.

As an example, when there is the physical touch in the computing apparatus 100, external force is applied to the motor of the gimbal 300, so rotation of the motor of the gimbal 300 may be sensed by the sensor of the gimbal 300, so the physical touch may be detected by a scheme in which the gimbal 300 senses that the motor is rotated not by a control signal for the gimbal 300.

Meanwhile, as an alternative, the pronunciation action pattern tracking may include a step of recognizing the pronunciation part object of the image object; a step of detecting a sound generation motion of the pronunciation part object; and a step of comparing whether a pattern of the sound generation motion matches a pattern of an object-specific sound of the sound object to match the image object in which the sound generation motion is detected, and the sound object with each other.

More specifically, (i) searching for or monitoring, by the computing apparatus 100, the image object using the photographing device 200 includes (ii) searching the pronunciation part object of the image object and monitoring the pronunciation part object, and (iv) the sound object is acquired and the sound pattern is detected in parallel to (iii) detecting the sound generation motion pattern as a result of the monitoring, (v) When the sound generation motion pattern of the image object and the sound pattern of the sound object coincide with each other as a result of comparison, the image object and the sound object are matched to be the same as each other.

In addition, if a time interval between (iii) and (iv) belongs to a predetermined range or matches a predetermined numerical value, the number of sound objects to be compared in (v) above may be reduced. In addition, it is described as above with respect to the sound generation motion tracking that in order to assist the matching in (v) above, the time in the image data and the time in the sound data may be synchronized with each other by the scheme of statistically reflecting the time required for processing the image data and the time required for processing the sound data. The sound delay time described above with respect to the sound generation motion tracking may also be applied to the pronunciation action pattern tracking, so a repeated description thereof is omitted.

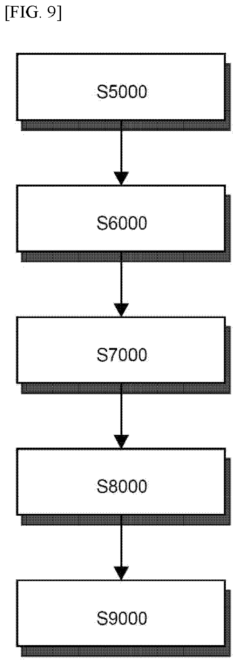

As described above regarding the specification of the sound object, the computing apparatus 100 may also use the image data for detection and processing of the objects based on the sound, so likewise, FIG. 9 is a flowchart exemplarily illustrating a method for processing an image and a sound (an image and sound processing method) according to another embodiment of the present disclosure.

According to the image and sound processing method, the computing apparatus 100 performs a step S5000 of performing a sound input process S5000a and an image input process S5000b.

Specifically, the sound input process S5000a refers to a process of acquiring the entire sound ('sound') from the sound input device 250, performing preprocessing which is a process of processing the entire sound ('sound') into a standard that may be input to a machine learning model, and selecting at least one data recognition model suitable for detailed processing of the entire sound ('sound').

Likewise, the image input process S5000b refers to a process of acquiring the entire image from the photographing device 200, performing preprocessing which is a process of processing the entire image a standard that may be input to the machine learning model, and selecting at least one data recognition model suitable for detailed processing of the entire image.

Here, the data recognition model suitable for detailed processing of the entire sound ('sound') and the data recognition model suitable for the detailed processing of the entire image may be different from each other, the same, or may share at least part of the data.

Next, the image recognition data selection module and the sound recognition data selection module implemented by the computing apparatus 100 further perform a step S6000 of selecting data required for the detailed processing of each of the sound and the image from the data of the entire sound ('sound') and the entire image, respectively.

In step S6000, the image recognition data selection module and the sound recognition data selection module may be image and sound recognition data selection modules connected to each other, for example, "when a cat is recognized as an object", the image and sound recognition data selection module may select an image of a "cat" object and a sound of the "cat" object.

The selected image and sound data are not limited to those of the same object. For example, objects, partial objects, or spatial objects that are related to each other may be selected together. As an example, when a "baseball player" image object corresponding to "a person holding a baseball bat" is selected, a "baseball bat" sound object corresponding to a "sound made when the baseball bat hits a ball" may be selected jointly.

Subsequently, each of the image data recognition module and the sound data recognition module implemented by the computing apparatus 100 applies the selected data to the data recognition model and perform the detailed processing to derive a result value (S7000).

In step S7000, the image data recognition module and the sound data recognition module may be the image and sound data recognition modules connected to each other, for example, a layer of a data recognition model for the image and a data recognition model for the sound (e.g., a last layer, a hidden layer, etc.) may be interconnected and affect mutual result values. As an example, with respect to the "person playing baseball" image object and the "baseball bat" sound object, an action of the person swinging the bat and a sound of the baseball bat hitting the ball are correlated to each other, and context information based on an image "the person hits the ball with the bat." and context information based on a sound "non-verbal sound of the bat hitting the ball is detected." may be derived as the result value.

According to the image and sound processing method, the computing apparatus 100 may recognize a command according to the context information and perform a service matching procedure corresponding to the command (S8000).

As an example, the computing apparatus 100 may perform a motion of recognizing a sound command of a user 'turn on the living room light' and turning on the living room light based on the IoT.

In addition, according to the image and sound processing method, the computing apparatus 100 may update the data recognition model based on an evaluation value of the result value (S9000). In step S9000, the computing apparatus 100 may make the query to the user through the display device or speaker in order to receive the evaluation value input from the user.

As an example, the computing apparatus 100 may recognize a gesture command of the user and ask `Do you want to turn on the living room light?'. If the user responds 'no', the computing apparatus 100 may determine this as a negative evaluation and change a weight of the data recognition model so that the gesture command is not recognized as a command to 'turn on the living room light'. For example, the data recognition model may be trained based on at least one of reinforcement learning, supervised learning, and/or unsupervised learning.

In this way, by performing the steps described above with respect to the embodiments of the present disclosure, a computing apparatus that processes sound acquired from objects, or a combination of sound and image, may determine various information about the objects.

The components illustrated in the drawings are illustrated as being implemented in one computing apparatus, for example, a mobile terminal, for convenience of explanation, but the computing apparatus 100 for performing the method of the present disclosure may be constituted by a plurality of devices linked to each other. Therefore, each step of the method of the present disclosure described above may be performed by the gimbal 300 with a communication unit and a processor built therein in addition to the mobile terminal, so in addition, it is apparent that each step may be performed as one computing apparatus directly performs the method, or the one computing apparatus supports the other computing apparatus linked to the one computing apparatus to perform the method.

As described up to now, there is an effect in that the method and the device according to the present disclosure can recognize and track one or more objects by using a sound or a combination of the sound and an image, actively acquire information on the object and an environment, and in particular, remotely acquire state information of the object by the sound or the combination of the sound and the image, and determine an object with which the object interacts, so remote input and output are enabled using the sound or the combination of the sound and the image of a portable computing apparatus throughout all embodiments and modified examples.

Based on the above description of the various exemplary embodiments of the present disclosure, it will be apparent to those skilled in the art that the method and/or the processes of the present disclosure, and the operations thereof, may be realized with hardware, software, or any combination of hardware and software suitable for a particular application. The hardware may include a general purpose computer and/or a dedicated computing apparatus or a particular computing apparatus or a special appearance or component of a particular computing apparatus. The processes may be realized by one or more processors, for example, microprocessors, controllers, for example, microcontrollers, embedded microcontrollers, microcomputers, Arithmetic Logic Units (ALUs), digital signal processors, for example, programmable digital signal processors, or other programmable devices, having internal and/or external memory. Additionally or alternatively, the processes may be performed using an Application Specific Integrated Circuit (ASIC), a programmable gate array, such as a Field Programmable Gate Array (FPGA), a Programmable Logic Unit (PLU) or Programmable Array Logic; (PAL), or any other device capable of executing and responding to instructions, and any other device or combination of devices that may be configured to process electronic signals. The processing device may execute an Operating System (OS) and one or more software applications executed on the OS. Further, the processing device may also access, store, manipulate, process, and generate data in response to the execution of the software. For ease of understanding, there is a case where it is described as one processing device is used, but those skilled in the art will recognize that a processing device may include a plurality of processing elements and/or multiple types of processing elements. For example, a processing device may include a plurality of processors or one processor and one controller. Further, other processing configurations are possible, such as parallel processors.

Software may include computer programs, code, instructions, or a combination of one or more thereof, and may configure a processing device to operate as desired, or may independently or collectively instruct a processing device. The software and/or data may be permanently or temporarily embodied in any type of machine, component, physical device, virtual equipment, computer storage medium or device, or transmitted signal wave, in order to be interpreted by a processing device or to provide instructions or data to a processing device. The software may be distributed across networked computer systems and stored or executed in a distributed manner. The software and data may be stored on one or more machine-readable recording media.

Moreover, the objects of the technical solution of the present disclosure, or portions thereof that contribute to the prior art, may be implemented in the form of program instructions that can be carried out by various computer components and recorded on a machine-readable medium. The machine-readable medium may include program instructions, data files, data structures, and the like, singly or in combination. The program instructions recorded on the machine-readable recording medium may be specifically designed and constructed for the exemplary embodiment or may be known and available to those skilled in the computer software field. Examples of the computer readable recording medium include a magnetic medium, such as a hard disk, a floppy disk, or a magnetic tape, an optical recording medium, such as a CD-ROM or a DVD, a magneto-optical medium, such as a floptical disk, and a hardware device which is specifically configured to store and execute the program command such as a ROM, a RAM, and a flash memory. Examples of program instructions may be generated using structured programming languages such as C, object-oriented programming languages such as C++, or high-level or low-level programming languages (including assembly language, hardware description languages, and database programming languages and techniques) that may be stored and compiled or interpreted for execution on processors, processor architectures, or heterogeneous combinations of different hardware and software, or any other machine capable of executing the program instructions, as well as any one of the foregoing devices, so that machine code, bytecode, and even high-level language code that can be executed by a computer using an interpreter are included.

Thus, in one aspect of the present disclosure, the methods and the combinations of the methods described above may be implemented as executable codes that perform each of the steps when performed by one or more computing apparatuses. In other aspects, the method may be practiced as systems performing the steps, and the methods may be distributed in various ways across devices, or all functions may be integrated into one dedicated, stand-alone device or other hardware. In another aspect, the means for performing the steps associated with the processes described above may include any of the hardware and/or software described above. All such sequential combinations are intended to fall within the scope of the present disclosure.

For example, the above hardware devices may be configured to operate as one or more software modules to perform the operations of the exemplary embodiments, and vice versa. The hardware device may include a processor, such as an MPU, CPU, GPU, TPU, coupled with memory, such as ROM/RAM, for storing program instructions, and configured to execute instructions stored in the memory, and may include a communication unit for transmitting and receiving signals to and from external devices. Additionally, the hardware device may include a keyboard, mouse, or other external input devices for receiving instructions written by the developer.

While the present disclosure has been described above with reference to certain details, such as specific components, and by means of specific exemplary embodiments and drawings, which are provided for a more general understanding of the disclosure, the disclosure is not limited to these exemplary embodiments, and various modifications and variations may be made from these descriptions by one having ordinary knowledge in the art to which the disclosure belongs.

Accordingly, the spirit of the disclosure is not to be limited to the exemplary embodiments described above, and the claims of the patent appended to the present disclosure, as well as all equally or equivalently modified variations thereof, will be the to fall within the scope of the spirit of the disclosure. For example, even though the described technologies are performed in an order different from the described method, and/or the described components of the system, the structure, the apparatus, the circuit, and the like may be combined in a different form from the described method or replaced or substituted by other constituent elements or equivalents, the appropriate result may be achieved.

Such equivalents or equivalent variations shall include, for example, logically equivalent methods that are capable of producing the same results as practicing the methods according to the present disclosure, and the spirit and scope of the present disclosure shall not be limited by the foregoing examples, but shall be understood in the broadest sense permitted by law.

### [Mode for Invention]

Related contents in the best mode for carrying out the present disclosure are described as above.

### [Industrial Applicability]

The present disclosure can be used in a system that processes a sound.

## Claims

1. A method for processing a sound, which is performed by a computing apparatus including a processor, the method comprising:
acquiring a sound including at least one sound object; and
generating sound processing information from the sound by using a sound processing module,
wherein the generating of the sound processing information includes,
classifying a first category of each of the at least one sound object, and
generating first detailed classification information including at least one of characteristics which are a property of the at least one sound object which is invariant with respect to time or a state which is the property of the at least one sound object which is variable with respect to the time.

2. The method of claim 1, wherein the sound processing module includes a sound processing model and a sound interpreter connected to the sound processing model, and
the generating of the first detailed classification includes
selecting the sound processing model corresponding to the first category of the sound object, and
acquiring at least one of verbal information or non-verbal information from the sound by using the sound interpreter.

3. The method of claim 2, wherein the sound interpreter includes at least one of
a language processor interpreting a language included in the sound and acquiring a context corresponding to the language, or
a non-verbal processor interpreting a non-verbal sound included in the sound, and acquiring at least one of an emotion, a priority, location information, or a voiceprint of the at least one sound object.

4. The method of claim 1, wherein the generating of the first detailed classification includes
attempting to detect a partial object from the sound object, and
further generating an analysis result of at least one of a characteristic or a state for the partial object included in the first detailed classification information when the partial object is detected.

5. The method of claim 4, wherein the partial object is a part of the at least one sound object or a component belonging to the at least one sound object.

6. The method of claim 1, further comprising:
calculating location information of the sound of each of the at least one sound object by using a sound tracking controller.

7. The method of claim 6, further comprising:
inducing the at least one sound object to perform pronunciation to specify the at least one sound object.

8. The method of claim 6, further comprising:
wherein the computing apparatus is linked to a gimbal having one or more rotational axes,
controlling the gimbal based on location information of the sound of each of the at least one sound object.

9. The method of claim 8, wherein the controlling of the gimbal includes
querying a first sound object among the at least one sound object as to and confirming whether the first sound object is a generation source of the sound, and
confirming whether an object which performs pronunciation is an object corresponding to the first sound object through image tracking using the gimbal controlling a photographing device.

10. The method of claim 1, further comprising:
acquiring an image including at least one image object;
classifying a second category of each of the at least one image object; and
generating second detailed classification information including at least one of a characteristic or a state that is a property of the at least one image object.

11. The method of claim 10, further comprising:
matching the at least one sound object and the at least one image object with each other based on at least one of the first category, the second category, the first detailed classification information, or the second detailed classification information.

12. The method of claim 10, further comprising:
matching the at least one sound object and the at least one image object to each other by capturing a sound generation motion of the at least one image object.

13. The method of claim 10, wherein the sound object and the image object are matched with each other by comparing an individual sound of each of the at least one sound object and a sound generation motion of the each of at least one image object.

14. A non-transitory computer-readable medium including a computer program, wherein the computer program allows a computing apparatus to perform a method for processing a sound, the method comprising:
acquiring a sound including at least one sound object; and
generating sound processing information from the sound by using a sound processing module, and
wherein the generating of the sound processing information includes,
classifying a first category of each of the at least one sound object, and
generating first detailed classification information including at least one of characteristics which are a property of the at least one sound object which is invariant with respect to time or a state which is the property of the at least one sound object which is variable with respect to the time.

15. A computer device comprising:
a processor; and
a communication unit,
wherein the processor
acquires a sound including at least one sound object,
generates sound processing information from the sound by using a sound processing module,
classifies a first category of each of the at least one sound object when the sound processing information is generated, and
generates first detailed classification information including at least one of characteristics which are a property of the at least one sound object which is invariant with respect to time or a state which is the property of the at least one sound object which is variable with respect to the time.
